(19) **Europäisches Patentamt / European Patent Office / Office européen des brevets**

(11) **EP 4 150 297 B1**

(12) **FASCICULE DE BREVET EUROPEEN**

(45) Date de publication et mention de la délivrance du brevet:
**02.07.2025 Bulletin 2025/27**

(21) Numéro de dépôt: **21725104.0**

(22) Date de dépôt: **07.05.2021**

(51) Classification Internationale des Brevets (IPC):
**G01C 19/64** *(2006.01)*    **G21K 1/00** *(2006.01)*
**H05H 3/00** *(2006.01)*

(52) Classification Coopérative des Brevets (CPC):
**G01C 19/64; G21K 1/006**

(86) Numéro de dépôt international:
**PCT/EP2021/062197**

(87) Numéro de publication internationale:
**WO 2021/228722 (18.11.2021 Gazette 2021/46)**

(54) **PUCE ATOMIQUE POUR CAPTEUR INERTIEL A ATOMES ULTRAFROIDS ET CAPTEUR ASSOCIE**

**ATOMCHIP FÜR INERTIALSENSOR MIT ULTRA-KALTATOM UND ENTSPRECHENDER SENSOR**

**ATOMIC CHIP FOR ULTRA-COLD ATOM INERTIAL SENSOR AND ASSOCIATED SENSOR**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.05.2020 FR 2004743**

(43) Date de publication de la demande:
**22.03.2023 Bulletin 2023/12**

(73) Titulaire: **THALES**
**92400 Courbevoie (FR)**

(72) Inventeurs:
- **DUPONT-NIVET, Matthieu**
  **91767 Palaiseau Cedex (FR)**
- **WIRTSCHAFTER, Benjamin**
  **91767 Palaiseau Cedex (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**WO-A1-2017/089489    CN-A- 102 927 978**

## Description

## DOMAINE DE L'INVENTION

La présente invention concerne le domaine des capteurs inertiels à atomes ultrafroids. Plus particulièrement l'invention porte sur des puces et les capteurs associés permettant la mesure d'une vitesse angulaire selon deux ou trois axes de mesure.

## ETAT DE LA TECHNIQUE

Le capteur décrit dans le document WO2017089489 décrit un capteur inertiel (gyroscope) à atomes ultrafroids sur puce utilisant des ondes de matière piégées décrivant des trajectoires fermées incluant une aire, dont la structure et le principe de fonctionnement sont rappelés ci-dessous.

Le document CN102927978A divulgue aussi une puce atomique pour capteur inertiel à atomes ultrafroids de construction similaire à WO 2017/089489.

Les mesures de rotation sur ce type de dispositif sont effectuées en exploitant l'effet Sagnac. Le déphasage $\theta$ induit par effet Sagnac entre deux ondes de matière contrarotatives dans un référentiel tournant à la vitesse angulaire $\Omega$, est donné par :

$$\theta = \frac{2Am}{\hbar}\,\Omega \qquad (1)$$

où $A$ est l'aire inscrite dans les trajectoires atomiques, $m$ la masse des atomes et $\hbar$ la constante de Planck réduite.

On définit par atomes ultrafroids des atomes dont la température est inférieure à 400 nanokelvins, préférentiellement à 300 nanokelvins. La température d'atomes ultrafroids thermiques est, par exemple pour des atomes de Rubidium, comprise entre 50 et 400 nanokelvins et préférentiellement entre 100 et 300 nanokelvins.

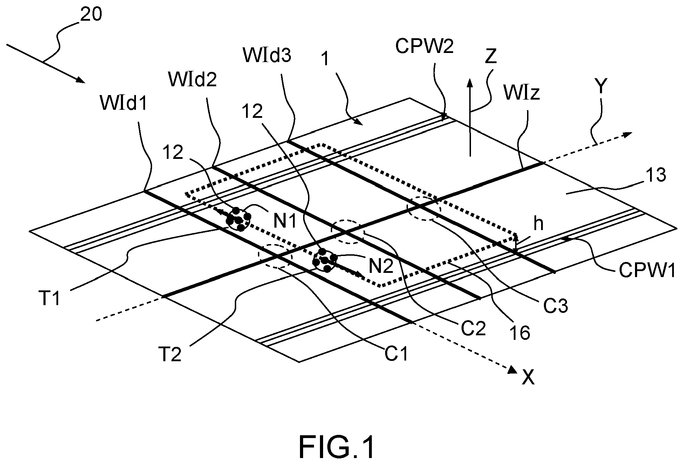

Le principe est de réaliser une trajectoire parcourue de manière contrapropagative par deux nuages d'atomes piégés magnétiquement. La réalisation et le déplacement du piège magnétique selon la trajectoire sont réalisés par des fils conducteurs et des guides microondes selon par exemple la topologie illustrée figure 1.

La figure 1 illustre schématiquement une puce 1 à atomes ultrafroids 12 ainsi que la trajectoire 16 de deux nuages atomiques N1 et N2. Une partie de la surface de la puce 1 forme un plan de mesure 13. Un axe normal au plan de mesure 13 définit l'axe de mesure Z, selon lequel une mesure de rotation $\Omega z$ est réalisée par le gyromètre.

La puce 1 comprend des moyens adaptés à générer un premier piège à atomes ultrafroids T1 et un deuxième piège à atomes ultrafroids T2, un piège permettant d'immobiliser un nuage d'atomes ultrafroids 12

dans un état interne différent de l'autre piège, à une distance prédéterminée h dudit plan de mesure 13. Par exemple le piège T1 comprend les atomes dans le niveau électronique ou état |a> (nuage N1) et le piège T2 comprend des atomes dans l'état |b> (nuage N2). Les niveaux |a> et |b> sont espacés d'une fréquence $\omega_0/2\pi$. Par exemple dans le cas du rubidium 87 il s'agit des deux niveaux hyperfins |F=1,m-$_F$=-1> et |F=2,m-$_F$=1>, espacés d'environ 6,8 GHz.

Ces moyens permettent également de déplacer les nuages selon la trajectoire 16 localisée dans un plan parallèle au plan de mesure 13, à une hauteur h de ce plan, tel qu'illustré figure 1. Ces moyens sont constitués de guides d'onde et de fils conducteurs tels que décrits ci-dessous.

Les moyens comprennent un premier guide d'onde CPW1 et un deuxième guide d'onde CPW2 adaptés à la propagation de micro-ondes à des pulsations $\omega_a$ et $\omega_b$. Les guides d'onde sont parallèles et disposés symétriquement par rapport à un axe Y du plan de mesure. Les deux guides d'ondes CPW1 et CPW2 sont connectés à au moins un générateur de tension ou de courant à fréquences micro-ondes. Par exemple chacun des guides d'onde est réalisé par le dépôt de trois fils conducteurs parallèles pour réaliser un guide d'onde coplanaire. Dans d'autres réalisations on peut utiliser d'autres types de guides d'onde, en particulier des guides d'onde dont la fabrication est compatible avec les techniques de microfabrication par dépôt ou par gravure. On peut, par exemple, réaliser une ligne à microruban.

Les moyens comprennent également des fils conducteurs intégrés à la puce 1 et adaptés à être traversés par des courants continus. Les fils conducteurs sont répartis en un fil conducteur Wlz selon un axe de symétrie Y perpendiculaire à X et compris dans le plan de mesure 13, et en une pluralité de n fils conducteurs Wldi, i indice variant de 1 à n, parallèles entre eux et parallèles à l'axe X, n étant au moins égal à 2. Dans l'exemple de la figure 1 n=3, soit trois fils conducteurs Wld1, Wld2 et Wld3. Les fils sont agencés de manière à définir n points de croisement Ci (croisement entre Wlz et Wldi) localisés sur l'axe Y, ici 3 points de croisement C1, C2, C3.

Chaque fil conducteur est relié à un ou plusieurs générateurs de courant et/ou de tension, eux-mêmes reliés à une unité de traitement comportant au moins un microprocesseur. Les générateurs de tension et/ou de courant permettent de piloter aussi bien des courants continus que des courants alternatifs dans les fils. En particulier, des courants continus sont pilotés dans les fils conducteurs.

Dans le capteur, la puce à atomes 1 est placée dans une enceinte à vide entretenu, par exemple, à l'aide d'une pompe ionique et comportant préférentiellement un blindage magnétique. L'enceinte à vide comporte une source d'atomes ultrafroids. La source d'atomes ultrafroids est définie par :

- un émetteur d'atomes (*dispenser* en anglais), par exemple réalisé par un filament chauffant délivrant une vapeur de rubidium ;

- un piège primaire à atomes (optique et/ou magnétique), permettant de pré-refroidir et de disposer un nuage d'atomes ultrafroids au voisinage de la puce, pour charger en atomes les pièges magnétiques T1 et T2 décrits ultérieurement.

L'enceinte à vide comporte également une source de champ magnétique, extérieure à la puce 1. Elle permet d'imposer un champ magnétique homogène et stationnaire 20 sur une épaisseur au moins de l'ordre d'une hauteur h au-dessus du plan de mesure 13. Avantageusement, la direction du champ magnétique homogène est parallèle au plan de mesure.

Sur la figure 1 la trajectoire 16 en pointillés illustre la trajectoire des nuages d'atomes ultrafroids 12. Cette trajectoire fermée définit une aire notée A. Une distance h sépare le plan de la trajectoire 16 et le plan de mesure 13 de la puce. Préférentiellement h est compris entre 500 nm et 1 mm, et préférentiellement entre 5 $\mu$m et 500 $\mu$m.

La figure 2 illustre la géométrie des guides et fils de la puce atomique ainsi que les pièges T1 et T2.

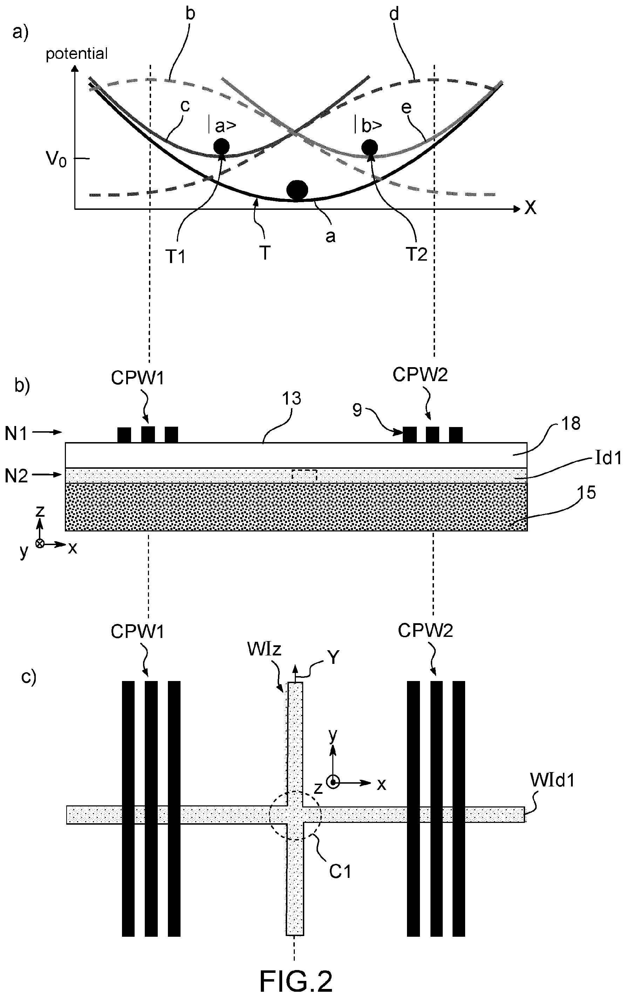

L'agencement spécifique des fils conducteurs et des guides d'ondes, associé à la source de champ magnétique homogène, permet d'obtenir aisément deux pièges T1 et T2 tels qu'illustrés dans la partie a) de la figure 2. Chaque piège T1 et T2 présente une valeur du minimum V0 non nulle et identique, et une courbure identique, condition nécessaire pour que le capteur fonctionne. En effet, comme expliqué plus loin, lorsqu'un courant continu est appliqué sur au moins deux fils conducteurs d'un point de croisement, le minimum de potentiel est localisé à la verticale de ce point de croisement. Lorsqu'ensuite une puissance hyperfréquence est envoyée dans les guides d'onde, le minimum central se transforme en deux minima de part et d'autre du minimum initial dans la direction des guides d'onde. Si le minimum initial n'est pas situé strictement à égal distance des deux guides d'ondes, les deux minima de potentiels créés n'auront pas rigoureusement la même valeur du minimum V0 et la même courbure.

La partie c) de la figure 2 illustre la disposition des fils conducteurs définissant le point de croisement initial C1 et des guides d'ondes (vue de dessus). La partie b) de la figure 2 décrit la disposition correspondante des fils conducteurs et des guides d'onde imprimés sur une puce en vue de profil, en coupe selon le fil conducteur WId1 qui croise le fil conducteur WIz selon l'axe de symétrie Y. Les guides d'onde CPW1 et CPW2 sont des guides d'onde coplanaires situés sur un premier niveau N1. La couche 18 isolante permet avantageusement d'aplanir le plan de mesure. Le matériau de la couche d'isolant électrique peut être par exemple du dioxyde de silicium, du nitrure de silicium ou benzocyclobutène. Un matériau conducteur est utilisé pour la fabrication des fils conducteurs, par exemple de l'or, et est déposé sur un substrat 15, formant un deuxième niveau N2. Le substrat peut être par exemple en silicium, en nitrure d'aluminium ou en carbure de silicium.

On voit sur la partie a) la séparation symétrique d'atomes ultrafroids, spécifique à l'état interne desdits atomes ultrafroids, et plus précisément les variations de potentiels en fonction de l'axe X de la puce 1.

La courbe « a » en noir présente un puits de potentiel correspondant à l'association du champ magnétique homogène et du champ créé par deux fils conducteurs sécants, le fil WIz parcouru par le courant $I_Z$ et le fil WId1 parcouru par le courant Id1. Il résulte un puits de potentiel local formant un piège atomique T selon trois dimensions. Un nuage d'atomes ultrafroids peut y être piégé et refroidis.

La courbe « b » en pointillés gris clair présente de manière schématique le potentiel créé par la transmission de micro-ondes à la fréquence $\omega_b$ dans le guide d'onde CPW1. Le champ émis par le passage de micro-ondes à la fréquence $\omega_b$ permet de modifier l'énergie des atomes ultrafroids et de déplacer les atomes d'états internes |b>. La courbe « e » en trait continu gris clair illustre le potentiel vu par les états internes |b> dus aux contributions des potentiels illustrés par la courbe « a » et par la courbe « b ». La courbe « e » présente un minimum local de potentiel permettant de piéger localement un nuage d'atomes ultrafroids d'états internes |b>.

De manière similaire, la courbe « d » en pointillés gris foncé présente de manière schématique le potentiel créé par la transmission de micro-ondes à la fréquence $\omega_a$ dans le guide d'onde CPW2. Le champ émis par le passage de micro-ondes à la fréquence $\omega_a$ permet de modifier l'énergie des atomes ultrafroids et de déplacer les atomes d'états internes |a>. La courbe « c » en trait continu gris foncé illustre le potentiel vu par les atomes d'états internes la> dû aux contributions des potentiels illustrés par la courbe « a » et par la courbe « d ». La courbe « c » présente un minimum local d'énergie permettant de piéger localement un nuage d'atomes ultrafroids d'états internes la>.

Les nuages d'atomes ultrafroids d'états internes la> et |b> peuvent être séparés et piégés de manière symétrique par rapport à l'axe de symétrie Y en imposant simultanément la propagation d'ondes de fréquence $\omega_a$ dans CPW2 et $w_b$ dans CPW1. Pour obtenir deux pièges dont les minima sont de même valeur V0 et dont les courbures sont de même valeur, il est important que le point de croisement C1 soit disposé à égal distance de CPW1 et CPW2, sur l'axe de symétrie Y.

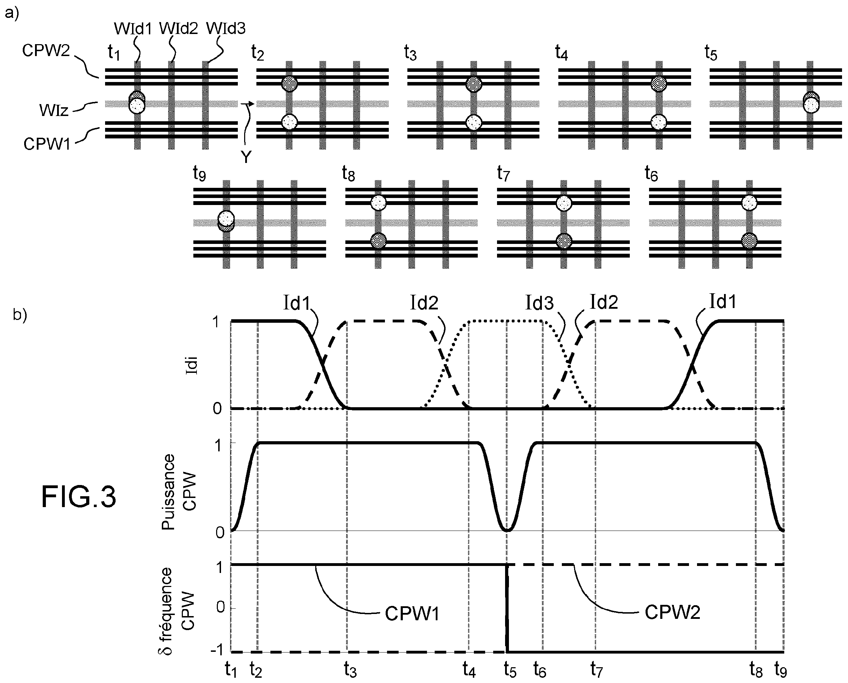

La figure 3 illustre le principe de génération de la trajectoire 16. La partie a) de la figure 3 présente schématiquement une séquence du déplacement de chacun des nuages d'atomes ultrafroids et la partie b) à des temps caractéristiques $t_1$ à $t_9$. La partie b) illustre de manière complémentaire une séquence des différents courants appliqués aux fils conducteurs, des puissances appliquées aux guides d'onde et des fréquences imposées aux guides d'onde, pour les temps correspondant à ceux de la partie a).

Dans la séquence présentée dans la figure 3, le courant $I_z$, non présenté, circulant dans Wlz est stationnaire, à une valeur constante. Dans la partie b) les valeurs des courants, des puissances et des fréquences sont arbitraires. L'ordonnée δ fréquence correspond à une variation de fréquence exprimée en unité arbitraire, autour d'une valeur moyenne de la fréquence. Les courants parcourant les fils conducteurs peuvent être compris entre 100 μA et 10 A, et les pulsations injectées dans les guides d'onde peuvent être comprises entre 6,6 GHz et 7 GHz dans le cas de l'utilisation d'atomes de rubidium.

Dans une **étape A0,** il y a une phase de préparation des atomes On génère un nuage d'atomes ultrafroids 12, incluant des phases d'émission desdits atomes, de refroidissement desdits atomes, d'initialisation desdits atomes dans au moins un état interne |a> et de piégeage d'un nuage de dits atomes ultrafroids dans un minimum local de potentiel, à une distance h du plan de mesure (piège T, courbe « a » de la figure 2 partie a)). La hauteur h est différente de 0 car le champ magnétique homogène 20 est non nul. Le piégeage s'effectue par passage de courants continus dans le fil Wlz et dans un des fils Wldi, le point de croisement de ces deux fils définissant le point de départ (ici C1 avec Wld1). On applique en même temps un champ magnétique de biais 20 parallèle au plan de la puce atomique qui se superpose au champ magnétique crée par les deux fils précédents. Le nuage d'atomes est alors piégé à la verticale de C1, intersection des fils Wlz et Wld1.

Dans une **étape B0** on initialise les états internes en superposant de manière cohérente lesdits atomes ultrafroids entre lesdits états la> et |b> par une première impulsion / **2**. Cette impulsion peut être réalisée par un laser, une émission micro-ondes, ou plus généralement par une méthode émettant des ondes à une fréquence de transition adaptée. Les courants $I_Z$ et $I_{d1}$ sont imposés respectivement aux fils conducteurs Wlz et Wld1. Les deux états internes la> et |b> sont superposés de manière cohérente et spatialement à l'aplomb du point de croisement C1.

La fonction d'onde est alors :

$$\frac{|a> + |b>}{\sqrt{2}} \qquad (2)$$

Dans une **étape C0** on sépare spatialement un nuage d'atomes d'état interne la> dans un piège T1 d'un nuage d'atomes d'état interne |b> dans un autre piège T2 et on déplace les pièges en sens opposé suivant une trajectoire fermée 16 contenue dans un plan perpendiculaire à l'axe de mesure Z. Le nuage d'atomes d'états internes |a> est symbolisé par un disque de texture claire et le nuage d'atomes d'états internes |b> est symbolisé par un disque de texture plus foncée. Cette étape est réalisée à partir de t1 jusqu'à t9.

Entre $t_1$ et $t_2$, la puissance micro-ondes injectée dans les guides d'onde CPW1 et CPW2, passe progressivement de 0 à sa valeur maximale. Une pulsation $\omega_a$ est envoyée dans le guide d'onde CPW1 et une pulsation $\omega_b$ est envoyée dans le guide d'onde CPW2, ce qui permet de séparer les deux nuages d'états internes différents de part et d'autre de l'axe de symétrie Y, d'une distance d, jusqu'aux positions schématisées dans $t_2$. Le piège T à atomes ultrafroids décrit précédemment à l'instant $t_1$ est alors transformé en deux pièges T1 et T2 à atomes ultrafroids, chaque piège permettant d'immobiliser un nuage d'atomes ultrafroids d'états internes différents de l'autre piège (en l'occurrence d'états internes |a> dans l'un des pièges, par exemple T1, et d'états internes |b> dans l'autre piège T2, comme décrit dans la partie a) de la figure 2.

Un point de croisement Ci correspond au croisement du fil Wlz avec le fil Wldi.

Entre $t_2$ et $t_3$, le courant $I_{d1}$ est progressivement coupé et $I_{d2}$ est progressivement porté à sa valeur maximale (l'intervalle de temps séparant $t_2$ et $t_3$ est typiquement de l'ordre de 10 ms et peut être compris entre 0,1 ms et 100 ms : les deux pièges T1 et T2 sont déplacés vers la droite jusqu'aux positions schématisées dans $t_3$.

Entre $t_3$ et $t_4$ le courant $I_{d2}$ est progressivement coupé et $I_{d3}$ est progressivement porté à sa valeur maximale : les deux pièges sont déplacés vers la droite jusqu'aux positions schématisées dans $t_4$.

Entre $t_4$ et $t_5$, la puissance micro-onde est progressivement coupée : les deux pièges sont ramenés au même endroit de la puce, schématisé dans $t_5$.

A $t_5$, les pulsations des deux guides micro-ondes sont modifiées : la pulsation $\omega_b$ est imposée dans CPW1 et la pulsation $\omega_a$ est imposée dans CPW2.

Entre $t_5$ et $t_6$, la puissance dans les deux guides d'onde passe progressivement de 0 à sa valeur maximale : les pièges sont séparés dans la direction verticale comme schématisé dans la figure $t_6$.

Entre $t_6$ et $t_7$, le courant $I_{d3}$ est progressivement coupé et $I_{d2}$ est progressivement porté à sa valeur maximale : les deux pièges T1 et T2 sont déplacés vers la gauche jusqu'aux positions schématisées dans $t_7$.

Entre $t_7$ et $t_8$, le courant $I_{d2}$ est progressivement coupé et $I_{d1}$ est progressivement porté à sa valeur maximale: les deux pièges sont déplacés vers la gauche jusqu'aux positions schématisées dans $t_8$. Cette opération peut être répétée plusieurs fois avec d'autres premiers fils conducteurs pour augmenter l'aire incluse dans la trajectoire 16.

Entre $t_8$ et $t_9$, la puissance micro-onde dans les guides d'onde est progressivement coupée. Les deux pièges T1 et T2 se déplacent jusqu'à fusionner en un seul piège se situant au point de départ schématisé en $t_1$.

On applique ainsi des courants continus aux deux fils correspondant au point de croisement initial C1, et au cours du temps on applique successivement ces courants aux différents points de croisements Ci situés sur l'axe de symétrie, en appliquant simultanément une puissance microonde sur les guides d'ondes.

Pendant l'étape C0 les courants continus appliqués aux différents fils Wldi varient continûment (augmentation et diminution) entre 0 et une valeur maximale Idimax (normalisée à 1 sur la figure 3), tandis que le champ magnétique 20 et le courant $I_z$ restent constants pendant la séquence. Dans toute la séquence A0, B0 et C0 les deux pièges T1 et T2 restent à l'altitude h.

Les deux pièges T1 et T2 se déplacent dans le sens « d'allumage » des points de croisement : du point de croissement C1 vers le point de croisement Cn. Le retour s'effectue en inversant les fréquences microonde et en allument les courants continus successivement dans les fils correspondants aux différents points de croisement en les parcourant de Cn vers C1.

On fait ainsi parcourir aux pièges la trajectoire fermée 16.

La trajectoire fermée 16 des atomes contient alors une aire A, la fonction d'onde atomique est donc :

$$\frac{|a> + \exp(i\varphi)|b>}{\sqrt{2}} \qquad (3)$$

Avec :

$$\varphi \ \omega_0 t + \frac{m}{\hbar}\Omega_z A \qquad (4)$$

Dans une **étape D0** on recombine les états internes |a> et |b> en appliquant aux atomes ultrafroids une deuxième impulsion $\pi / 2$, ce qui transfert la différence de phase sur les populations des deux niveaux atomiques :

$$p_a = \frac{1}{2}[1 + \cos(\varphi - \omega t)] \qquad (5)$$

$$p_b = \frac{1}{2}[1 - \cos(\varphi - \omega t)] \qquad (6)$$

où $\omega$ est la pulsation de l'impulsion $\pi/2$.

Les impulsions $\pi/2$ peuvent être envoyées aux atomes via les guides micro-ondes ou via un émetteur microonde séparé.

Puis on mesure la densité d'atomes dans un état interne choisi parmi au moins la> et |b>. Cette mesure peut être effectuée par exemple par absorption laser en sondant la résonance entre la pulsation propre à un état interne et celle du laser.

Enfin dans une **étape E0** on déterminer la phase Sagnac des atomes ultrafroids et on calcule la vitesse de rotation du capteur selon l'axe Z,

La mesure d'au moins une population d'atomes dans un des états |a> ou |b> permet de déterminer la phase Sagnac, par exemple pour l'état interne |a> en considérant l'équation (5), puis la vitesse de rotation $\Omega_z$

avec l'équation (1).

On peut faire parcourir aux pièges cette trajectoire N fois avant de mesurer la phase Sagnac et ainsi mesurer une phase qui sera potentiellement N fois plus élevée.

Afin de mettre en œuvre le procédé décrit plus haut le capteur à atomes ultrafroids permettant une mesure de vitesse de rotation $\Omega_z$ comprend :

- une puce atomique 1 telle que décrite précédemment, avec les guides d'onde et les fils conducteurs,

- une source d'atomes pour générer le nuage d'atomes ultrafroids près du plan de mesure 13 de la puce atomique,

- un générateur du champ magnétique homogène 20

- au moins un processeur, au moins un générateur de tension ou de courant continu adapté à commander des courants électriques dans les fils conducteurs et au moins un générateur de tension ou de courant micro-ondes connecté aux guides d'ondes,

- un système de détection d'intensité optique adapté à mesurer au moins une polulation d'atomes ultrafroids dans un état interne, cette mesure permettant la détermination de la phase Sagnac et de la vitesse de rotation $\Omega_z$.

Ce capteur décrit ci-dessus et dans le document WO2017089489 permet uniquement, à partir d'une trajectoire comprise dans un plan parallèle au plan de mesure 13, une mesure de vitesse de rotation selon l'axe Z perpendiculaire au plan de la puce. Pour pouvoir mesure la vitesse de rotation selon les trois axes, il est nécessaire de disposer de 3 capteurs de ce type, ce qui est couteux, encombrant et complexe à réaliser, particulièrement pour le positionnement respectif des trois axes (le réglage de leur orthogonalité), ce réglage présentant une dérive temporelle qui diminue la précision de l'ensemble.

Le document CN102927978 décrit une puce atomique pour capteur inertiel présentant une structure différente de guides d'ondes et de fils conducteurs.

Un but de la présente invention est de remédier aux inconvénients précités en proposant un puce atomique et des capteurs basés sur cette puce, capables de réaliser une mesure de vitesse de rotation selon deux axes perpendiculaires pour une première version de capteur et selon trois axes perpendiculaires pour une deuxième version de capteur.

**DESCRIPTION DE L'INVENTION**

La présente invention a pour objet une puce atomique pour capteur à atomes ultrafroids, comportant un plan XY normal à un axe Z, la puce atomique comprenant :

- un premier et un deuxième guide d'ondes coplanaires adaptés à la propagation d'ondes hyperfréquences à des pulsations respective $\omega_a$ et $\omega_b$, disposés symétriquement de part et d'autre de l'axe X, dénommés guides selon X,

- un premier et un deuxième guide d'ondes coplanaires adaptés à la propagation d'ondes hyperfréquences à des pulsations respective $\omega'_a$ et $\omega'_b$, disposés symétriquement de part et d'autre d'un axe dont la projection dans le plan XY est selon un axe Y' différent de l'axe X et compris dans le plan XY, dénommés guides selon Y',
les guides selon X étant isolés électriquement des guides selon Y', une intersection desdits guides formant un parallélogramme de centre O définissant une origine du repère XYZ,

- au moins un premier fil conducteur et un deuxième fil conducteur dont les projections respectives dans le plan XY sont sécantes en O et forment entre elles un angle supérieur ou égal à 20°, lesdits fils conducteurs étant adaptés à être traversés par des courants continus.

Selon un mode de réalisation les guides selon X, les guides selon Y, le premier fil conducteur et le deuxième fil conducteur sont chacun disposés sur un niveau différent, chaque niveau étant isolé électriquement des niveaux voisins, lesdits niveaux formant un empilement disposé sur un substrat.

Selon un mode de réalisation la projection dans le plan XY du premier fil conducteur est orientée selon l'axe X et la projection dans le plan XY du deuxième fil conducteur est orientée selon l'axe Y'.

Selon un mode de réalisation l'axe Y' se confond avec l'axe Y.Selon un mode de réalisation l'axe Y' se confond avec l'axe Y, les projections respectives du premier fil conducteur et du deuxième fil conducteur dans le plan XY sont perpendiculaires entre elles et respectivement orientées à 45° des axes X et Y.

Selon une variante la puce atomique comprend en outre une pluralité de fils conducteurs disposés parallèlement au premier fil conducteur, formant une première pluralité de fils conducteurs et une pluralité de fils conducteurs disposés parallèlement audit deuxième fil conducteur, formant une deuxième pluralité de fils conducteurs, une projection dans le plan XY d'un fil de la première pluralité et d'un fil de la deuxième pluralité définissant un point de croisement sur le plan XY,

lesdites première et deuxième pluralité de fils conducteurs étant agencées de sorte qu'au moins une partie des points de croisement est à l'intérieur dudit parallélogramme.

Préférentiellement la première pluralité et la deuxième pluralité de fils conducteurs sont configurées de sorte qu'une sous-partie de ladite partie des points de croisement est située sur l'axe X et une autre sous partie de ladite partie des points de croisement est située sur l'axe Y'.

Selon un mode de réalisation les fils conducteurs présentent une largeur et dans laquelle une distance entre deux fils conducteurs voisins est comprise entre 0.5 fois et 2 fois ladite largeur.

Selon une variante la puce atomique selon l'invention est une puce atomique matricielle, et dans un premier mode de réalisation elle comprend un premier ensemble de premiers fils conducteurs indicés n et un deuxième ensemble de deuxième fils conducteurs indicés m perpendiculaires entre eux et formant respectivement des lignes et des colonnes d'une matrice,
chacun des premiers fils conducteur indicé n et des deuxièmes fils conducteurs indicés m étant confondus respectivement avec un axe Xn indicé n et avec un axe Ym indicé m, les guides selon l'axe Xn étant ainsi communs à tous les pixels de la ligne n et les guides selon l'axe Ym étant ainsi communs à tous les pixels la colonne m, chaque pixel de la matrice formant une puce élémentaire.

Selon une variante la puce atomique selon l'invention est une puce atomique matricielle, et dans un deuxième mode de réalisation elle comprend un premier ensemble de premiers fils conducteurs indicés n et un deuxième ensemble de deuxième fils conducteurs indicés m perpendiculaires entre eux et formant respectivement des lignes et des colonnes d'une matrice,
chacun des premiers fils conducteurs indicés n et des deuxièmes fils conducteurs indicés m étant orientés respectivement à 45° d'un axe Xk indicés k et à 45° d'un axe Yl indicés **l**, les guides selon l'axe Xk étant ainsi communs à tous les pixels d'une première diagonale de la matrice et les guides selon l'axe Yl étant ainsi communs à tous les pixels d'une deuxième diagonale, chaque pixel de la matrice formant une puce élémentaire.

Selon un mode de réalisation au moins un fils conducteur du premier ou du deuxième ensemble est remplacé par une pluralité de fils conducteurs parallèles entre eux, une portion des fils conducteurs de ladite pluralité étant comprise dans les parallélogrammes associés.

L'invention concerne également un capteur à atomes ultrafroids permettant une mesure de vitesse de rotation selon au moins deux axes X et Y' comprenant :

- une puce atomique selon l'invention placée dans une enceinte à vide,

- une source d'atomes agencée pour générer un nuage d'atomes ultrafroids près dudit plan XY de ladite puce atomique,
lesdits atomes ultrafoids présentant, lors de la phase d'initialisation de la mise en œuvre du capteur, une superposition d'états internes |a> et |b>

- un générateur d'un champ magnétique homogène,

- au moins un processeur, au moins un générateur de tension ou de courant continu adapté à commander des courants électriques dans lesdits fils conducteurs et au moins un générateur de tension ou de courant micro-ondes connecté audits guides d'ondes,

- lesdits guides d'ondes, lesdits fils conducteurs et le cas échéant le champ magnétique étant configurés, lors de la mise en œuvre du capteur, pour :

  - modifier l'énergie desdits atomes ultrafroids de manière à créer un minima de potentiel pour les atomes ultrafroids dans l'état interne |a> et un minima de potentiel pour les atomes ultrafroids dans l'état interne |b>, formant ainsi un premier et deuxième pièges à atomes ultrafroids, un piège permettant d'immobiliser un nuage d'atomes ultrafroids dans un état interne différent de l'autre piège, à une distance maîtrisée dudit plan de mesure, et

  - séparer spatialement les deux pièges et déplacer lesdits pièges suivant au moins une première trajectoire fermée comprise dans un plan perpendiculaire à X et une deuxième trajectoire fermée comprise dans un plan perpendiculaire à Y', chaque trajectoire étant parcourue dans un sens par les atomes ultrafroids du premier piège et dans le sens opposé par les atomes ultrafroids du deuxième piège,

  - le capteur comprenant en outre un système de détection d'intensité optique adapté à mesurer au moins une population de dits atomes ultrafroids dans un dit état interne.

Selon un mode de réalisation lesdits guides d'ondes et l'au moins un générateur de tension ou de courant micro-ondes, lesdits fils conducteurs et l'au moins un générateur de tension ou de courant continu, et le générateur du champ magnétique homogène, sont configurés pour que la première et la deuxième trajectoire fermée comprennent chacune au moins une première portion localisée à une première hauteur du plan XY et une deuxième portion localisée à une deuxième hauteur strictement supérieure à la première hauteur, et pour opérer un passage de la première hauteur à la deuxième hauteur par :

- une augmentation de la valeur du courant continu traversant chaque fil conducteur, entre une première valeur ($I_{W1}$', $I_{W2}$') et une deuxième valeur ($I_{W1}$", $I_{W2}$") non nulles et/ou,

  - une diminution d'une valeur du champ magnétique homogène entre une première valeur (B0') et une deuxième valeur (B0") non nulles,

et inversement pour un passage de la deuxième hauteur à la première hauteur.

Selon une variante le capteur à atomes ultrafroids permet une mesure de vitesse de rotation selon trois axes X, Y' et Z comprenant :

- une puce atomique) selon l'invention placée dans une enceinte à vide,

- une source d'atomes agencée pour générer un nuage d'atomes ultrafroids près dudit plan XY de ladite puce atomique, lesdits atomes ultrafoids présentant à l'état initialisé une superposition d'états internes |a> et |b>,

- un générateur d'un champ magnétique homogène,

- au moins un processeur, au moins un générateur de tension ou de courant continu adapté à commander des courants électriques dans lesdits fils conducteurs et au moins un générateur de tension ou de courant micro-ondes connecté audits guides d'ondes,

- lesdits guides d'ondes et lesdits fils conducteurs étant configurés pour :

  - modifier l'énergie desdits atomes ultrafroids de manière à créer un minima de potentiel pour les atomes ultrafroids dans l'état interne |a> et un minima de potentiel pour les atomes ultrafroids dans l'état interne |b>, formant ainsi un premier et deuxième pièges à atomes ultrafroids, un piège permettant d'immobiliser un nuage d'atomes ultrafroids dans un état interne différent de l'autre piège, à une distance maîtrisée dudit plan de mesure, et

  - séparer spatialement les deux pièges et déplacer lesdits pièges suivant une première trajectoire fermée comprise dans un plan perpendiculaire à X et initialisée à partir d'un premier point de croisement d'initialisation situé sur l'axe X, une deuxième trajectoire fermée comprise dans un plan perpendiculaire à Y' et initialisée à partir d'un deuxième point de croisement d'initialisation situé sur l'axe Y', et une troisième trajectoire fermée comprise dans un plan perpendiculaire à Z et initialisée à partir d'un troisième point de croisement d'initialisation situé au point O, chaque trajectoire étant parcourue dans un sens par les atomes ultrafroids du premier piège et dans le sens opposé par les atomes ultrafroids du deuxième piège,

- le capteur comprenant en outre un système de détection d'intensité optique adapté à mesurer au moins une population de dits atomes ultrafroids dans un dit état interne.

Selon un mode de réalisation lesdits guides d'ondes et l'au moins un générateur de tension ou de courant micro-ondes, lesdits fils conducteurs et l'au moins un générateur de tension ou de courant continu, et le générateur du champ magnétique homogène, sont configurés pour que les première et deuxième trajectoires fermées comprennent chacune au moins une première portion localisée à une première hauteur (h1) du plan XY et une deuxième portion localisée à une deuxième hauteur (h2) strictement supérieure à la première hauteur, et pour opérer un passage de la première hauteur à la deuxième hauteur par :

- une augmentation d'une valeur du courant continu traversant chaque fil conducteur définissant le point de croisement d'initialisation associé, entre une première valeur et une deuxième valeur non nulles, et/ou

- une diminution d'une valeur du champ magnétique homogène entre une première valeur et une deuxième valeur non nulles,

et inversement pour un passage de la deuxième hauteur à la première hauteur.

Selon une variante le capteur à atomes ultrafroids comprend:

- une puce atomique matricielle selon l'invention ,

- une source d'atomes agencée pour générer un nuage d'atomes ultrafroids près dudit plan XY de ladite puce atomique,

- un générateur d'un champ magnétique homogène,

- au moins un processeur, au moins un générateur de tension ou de courant continu adapté à commander des courants électriques dans lesdits fils conducteurs et au moins un générateur de tension ou de courant micro-ondes connecté audits guides d'ondes,

- un système de détection d'intensité optique,

le capteur étant adapté pour mesurer, selon les besoins et de manière reconfigurable, au moins une accélération et/ou une vitesse de rotation selon au moins une direction correspondant à celle des axes Xn et/ou des axes Ym, à partir desdites puces élémentaires.

Selon un autre aspect l'invention concerne un procédé de mesure d'une vitesse de rotation autour de deux axes X et Y' par un capteur à atomes ultrafroids comprenant une puce atomique, ladite puce atomique étant placée dans une enceinte à vide et comportant un plan XY normal à un axe Z, la puce atomique comprenant :

- un premier et un deuxième guide d'ondes adaptés à la propagation d'ondes hyperfréquences à des pulsations respective $\omega_a$ et $\omega_b$, disposés symétriquement de part et d'autre de l'axe X, dénommés guides selon X,

- un premier et un deuxième guide d'ondes adaptés à la propagation d'ondes hyperfréquences à des pulsations respective $\omega'_a$ et $\omega'_b$, disposés symétriquement de part et d'autre d'un axe dont la projection dans le plan XY est selon un axe Y' compris dans le plan XY, dénommés guides selon Y',
les guides selon X étant isolés électriquement des guides selon Y', une intersection desdits guides formant un parallélogramme de centre O définissant une origine du repère XYZ,

- au moins un premier fil conducteur W1 et un deuxième fil conducteur W2 dont les projections respectives dans le plan XY sont sécantes au point O et forment entre elles un angle supérieur ou égal à 20°, lesdits fils conducteurs étant adaptés à être traversés par des courants continus,

le procédé comprenant, pour la mesure de la vitesse de rotation selon un des axes X ou Y' dénommé axe de mesure, les étapes consistant à :

A Générer un nuage de dits atomes ultrafroids, incluant des phases d'émission desdits atomes, de refroidissement desdits atomes, d'initialisation desdits atomes dans au moins un état interne |a> et de piégeage d'un nuage de dits atomes ultrafroids dans un minimum local de potentiel, à une première hauteur dudit plan XY, ledit piégeage s'effectuant par passage de courants continus dans le premier et le deuxième fil conducteurs,

B Initialiser les états internes en superposant de manière cohérente lesdits atomes ultrafroids entre lesdits états la> et |b> par une première impulsion $\pi$ / **2** ;

C Séparer spatialement un nuage de dits atomes de dit état interne la> dans un piège d'un nuage de dits atomes de dit état interne |b> dans un autre piège, et déplacer lesdits pièges en sens opposé suivant une trajectoire fermée contenue dans un plan perpendiculaire à l'axe de mesure et initialisée à partir du point O, en appliquant une tension ou un courant à fréquences micro-ondes prédéterminées auxdits premier et deuxième guides selon l'axe de mesure, en appliquant au moins deux valeurs différentes de tension ou de courant continu aux premier et deuxième fils conducteurs et/ou en appliquant au moins deux valeurs différentes d'un champ magnétique homogène, selon une séquence prédéterminée, ladite trajectoire comprenant une portion localisée à une deuxième hauteur du plan XY différente de la première hauteur,

**D** Recombiner lesdits états internes |a> et |b> en appliquant auxdits atomes ultrafroids une deuxième impulsion $\pi / 2$ puis mesurer la densité d'atomes dans un état interne choisi parmi au moins |a> et |b> ;

**E** Déterminer la phase Sagnac desdits atomes ultrafroids et calculer la vitesse de rotation dudit capteur selon ledit axe de mesure,

le procédé comprenant en outre une mise en œuvre des étapes A à E pour mesurer la vitesse de rotation selon l'autre axe de mesure.

Selon une variante le procédé selon l'invention mesure une vitesse de rotation autour de trois axes X, Y' et Z avec un capteur à atomes froid comprenant une puce atomique, ladite puce atomique étant placée dans une enceinte à vide et comportant un plan XY normal à un axe Z, des axes XYZ formant un repère orthonormé, la puce atomique comprenant :

- un premier et un deuxième guide d'ondes adaptés à la propagation d'ondes hyperfréquences à des pulsations respective $\omega_a$ et $\omega_b$, disposés symétriquement de part et d'autre de l'axe X, dénommés guides selon X,

- un premier et un deuxième guide d'ondes adaptés à la propagation d'ondes hyperfréquences à des pulsations respective $\omega'_a$ et $\omega'_b$, disposés symétriquement de part et d'autre d'un axe dont la projection dans le plan XY est selon un axe Y' compris dans le plan XY, dénommés guides selon Y',
les guides selon X étant isolés électriquement des guides selon Y', une intersection desdits guides formant un parallélogramme de centre O définissant une origine du repère XYZ,

- une première pluralité de fils conducteurs parallèles entre eux et une deuxième pluralité de fils conducteurs parallèles entre eux, une projection dans le plan XY d'un fil de la première pluralité et d'un fil de la deuxième pluralité de fils conducteurs définissant un point de croisement,

une projection dans le plan XY desdites pluralités formant entre elles un angle supérieur ou égal à 20°, une projection dans le plan XY d'un fil de la première pluralité et d'un fil de la deuxième pluralité de fils conducteurs étant sécants au point O, lesdites premières et deuxième pluralité de fils conducteurs étant agencées de sorte qu'au moins une partie des points de croisement est à l'intérieur dudit parallélogramme,

le procédé comprenant :

- la mise en œuvre des étapes A à E du procédé tel que décrit précédemment pour la mesure des vitesses de rotation selon X, la première trajectoire fermée, comprise dans un plan perpendiculaire à X, étant initialisée à partir d'un premier point de croisement d'initialisation situé sur l'axe X,

- la mise en œuvre des étapes A à E du procédé tel que décrit précédemment pour la mesure des vitesses de rotation selon Y', la deuxième trajectoire fermée comprise dans un plan perpendiculaire à Y' étant initialisée à partir d'un deuxième point de croisement d'initialisation situé sur l'axe Y',

- pour la mesure de la vitesse de rotation selon l'axe Z, correspondant à l'axe de mesure :

  - la mise en œuvre des étapes A et B du procédé tel que décrit précédemment,

  - une étape **C'** consistant à séparer spatialement un nuage de dits atomes de dit état interne |a> dans un piège et d'un nuage de dits atomes de dit état interne |b> dans un autre piège, et déplacer lesdits pièges en sens opposé suivant une trajectoire fermée contenue dans un plan perpendiculaire à l'axe Z et initialisée à partir d'un troisième point de croisement d'initialisation, en appliquant une tension ou un courant à fréquences micro-ondes prédéterminées auxdits premier et deuxième guides selon l'un des axes X ou Y' dénommé axe choisi, et en appliquant une tension ou un courant continu aux fils conducteurs de la première et de la deuxième pluralité de fils conducteurs selon une séquence prédéterminée, de manière à exciter successivement des points de croisement disposés sur ou au voisinage de l'axe choisi,

  - la mise en œuvre des étapes D et E.

La description suivante présente plusieurs exemples de réalisation du dispositif de l'invention : ces exemples sont non limitatifs de la portée de l'invention. Ces exemples de réalisation présentent à la fois les caractéristiques essentielles de l'invention ainsi que des caractéristiques additionnelles liées aux modes de réalisation considérés.

**EP 4 150 297 B1**

L'invention sera mieux comprise et d'autres caractéristiques, buts et avantages de celle-ci apparaîtront au cours de la description détaillée qui va suivre et en regard des dessins annexés donnés à titre d'exemples non limitatifs et sur lesquels :

[Fig 1] La figure 1 déjà citée illustre un exemple de topologie des fils conducteurs et des guides microondes et de trajectoire des deux nuages d'atomes.

[Fig 2] La figure 2 déjà citée illustre la géométrie des guides et fils de la puce atomique ainsi que les pièges T1 et T2.

[Fig 3] La figure 3 déjà citée illustre le principe de génération de la trajectoire des nuages d'atomes sur la puce atomique.

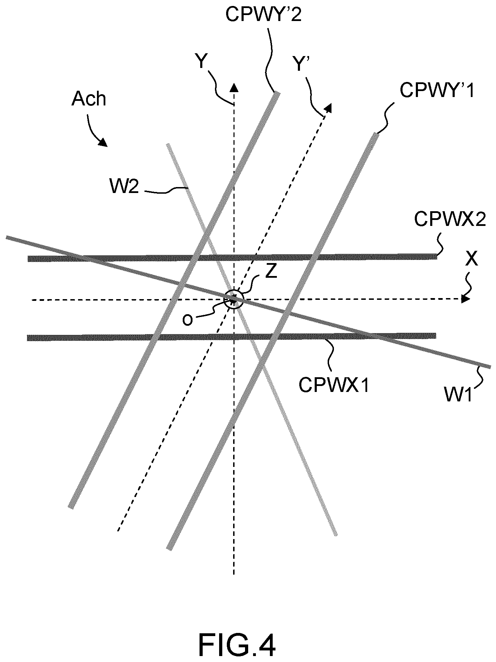

[Fig 4] La figure 4 illustre une puce atomique pour capteur à atomes ultrafroids selon un premier aspect de l'invention.

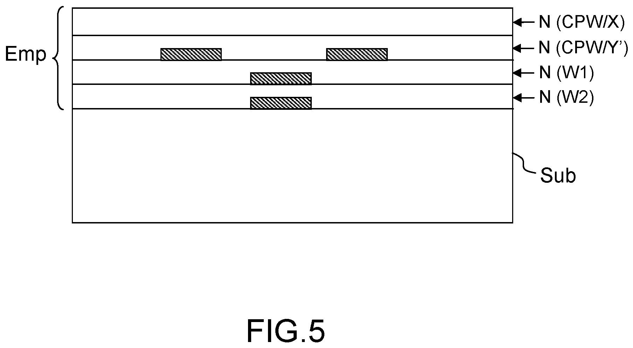

[Fig 5] La figure 5 illustre un mode de réalisation préféré de la puce atomique selon l'axe Z selon une coupe dans le plan OXZ.

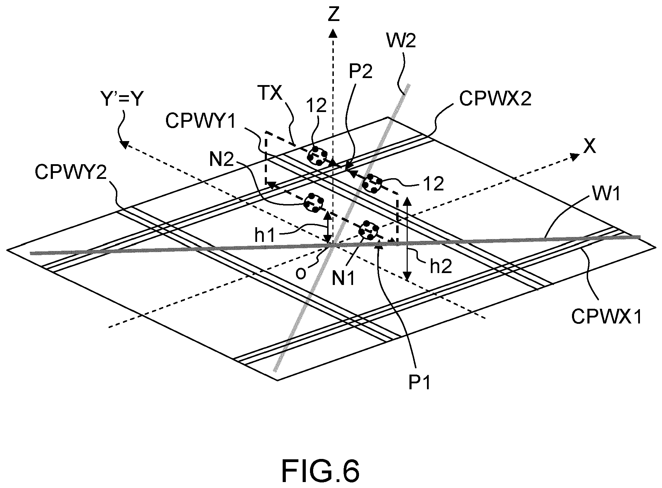

[Fig 6] La figure 6 illustre une trajectoire fermée des deux nuages d'atomes dans un plan contenant Z obtenue avec une puce atomique selon l'invention.

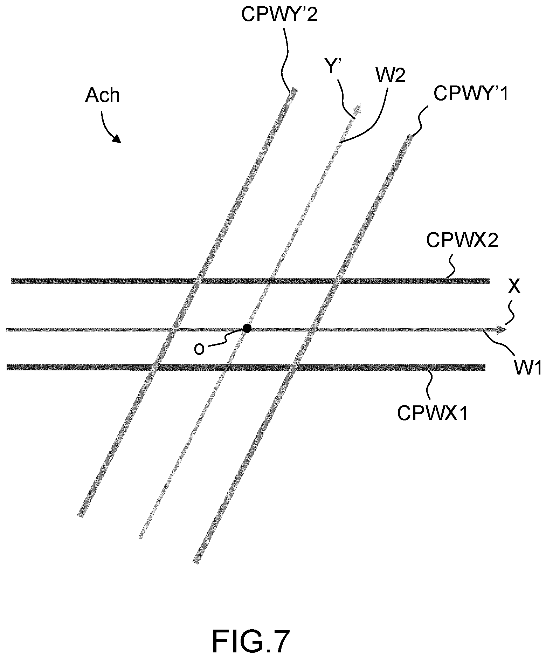

[Fig 7] La figure 7 illustre une première variante d'agencement des guides d'onde et des fils dans laquelle la projection dans le plan XY du premier fil conducteur W1 est orientée selon l'axe X et la projection dans le plan XY du deuxième fil conducteur W2 est orientée selon l'axe Y'.

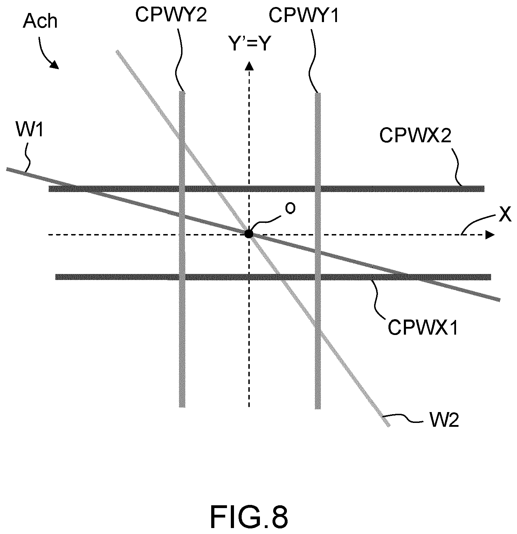

[Fig 8] La figure 8 illustre deuxième variante dans laquelle l'axe Y' se confond avec l'axe Y.

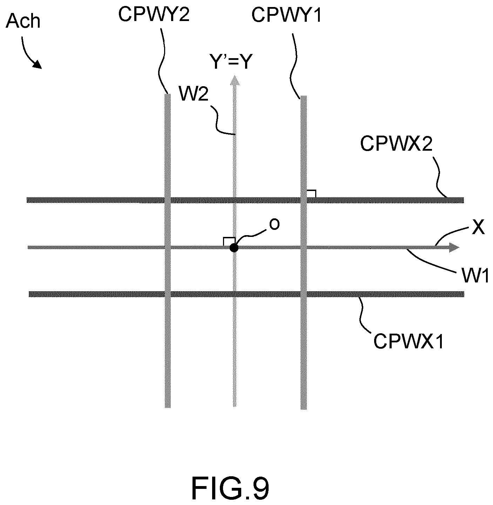

[Fig 9] La figure 9 illustre la combinaison de la première et de la deuxième variante.

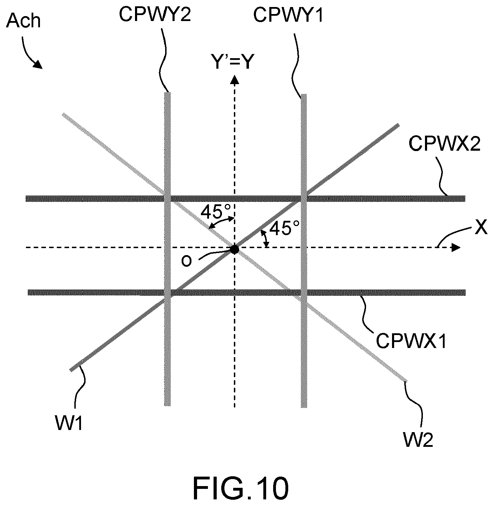

[Fig 10] La figure 10 illustre une troisième variante dans laquelle l'axe Y' se confond avec l'axe Y et les projections respectives du premier fil conducteur et du deuxième fil conducteur dans le plan XY sont perpendiculaires entre elles, et respectivement orientées à 45° des axes X et Y.

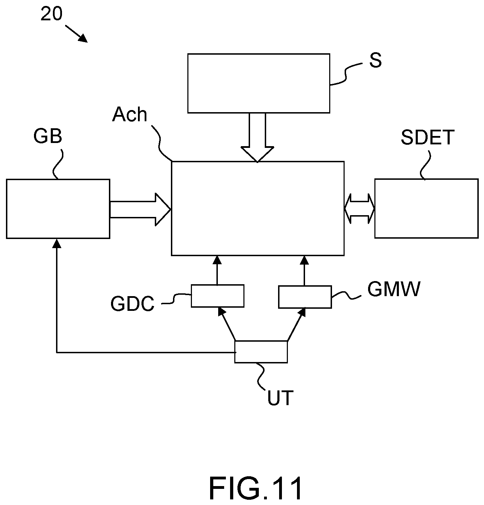

[Fig 11] La figure 11 illustre un capteur à atomes ultrafroids permettant une mesure de vitesse de rotation selon au moins deux axes X et Y' selon un autre aspect de l'invention.

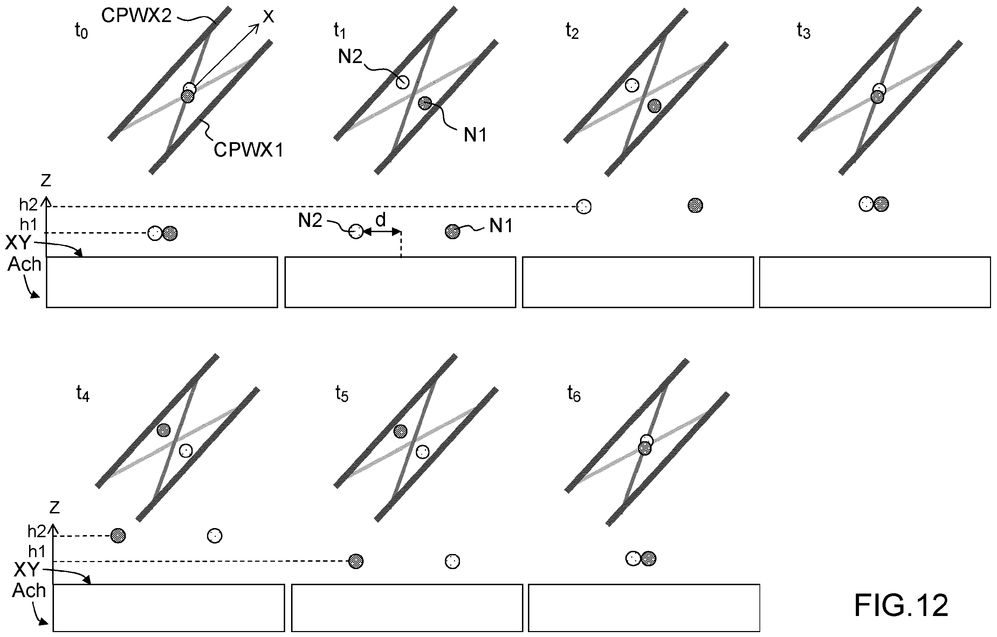

[Fig 12] La figure 12 illustre le trajet suivi par les deux nuages d'atomes à plusieurs instants pour former une boucle fermée, pour l'exemple de la trajectoire TX.

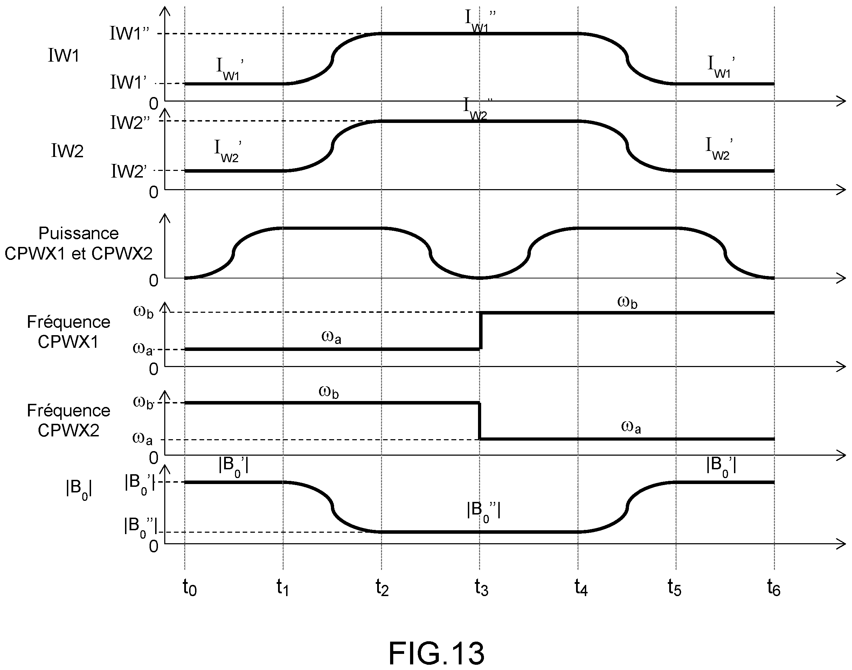

[Fig 13] La figure 13 décrit le chronogramme des courants appliqués aux deux fils conducteurs, la puissance et la fréquence appliquée aux guides microonde et la valeur du champ magnétique homogène B0 sur la durée entre les le premier et le dernier instant précédents.

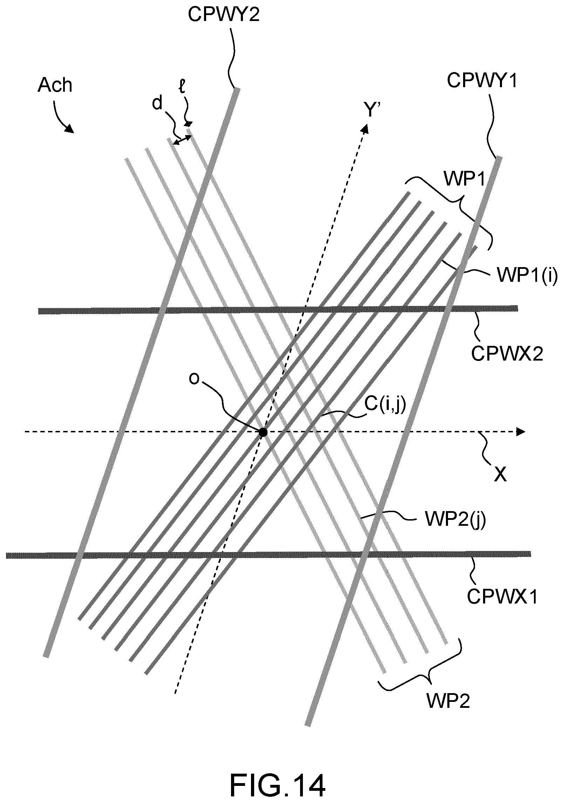

[Fig 14] La figure 14 illustre une puce atomique selon l'invention compatible d'une mesure selon 3 axes, comprenant une pluralité de fils conducteurs disposés parallèlement au premier fil conducteur, formant une première pluralité de fils conducteurs WP1 et une pluralité de fils conducteurs disposés parallèlement au deuxième fil conducteur, formant une deuxième pluralité de fils conducteurs.

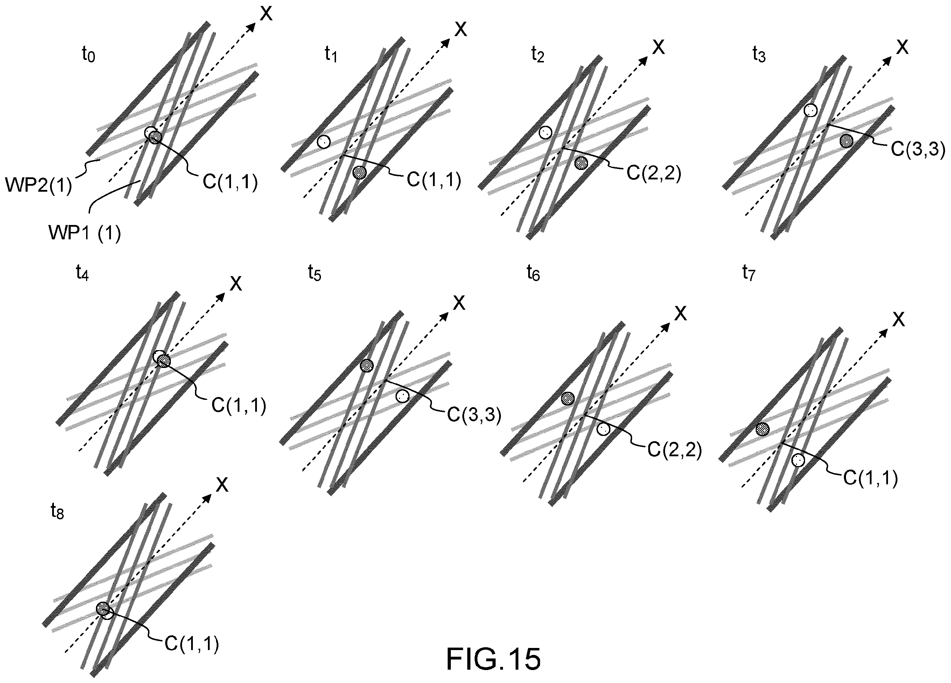

[Fig 15] La figure 15 illustre la trajectoire, dans un plan parallèle au plan de la puce atomique, des deux nuages d'atomes piégés en utilisant les guides selon X (seuls représentés).

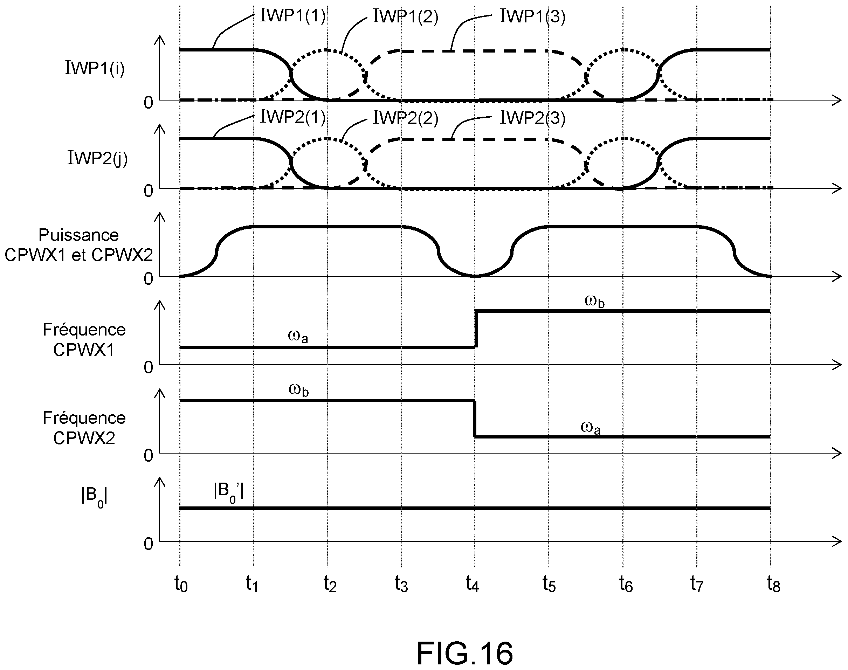

[Fig 16] La figure 16 illustre le chronogramme associé des valeurs des courants appliqués aux fils concernés, des puissances et fréquence microonde appliquées aux guides selon X et du champ magnétique homogène en fonction du temps.

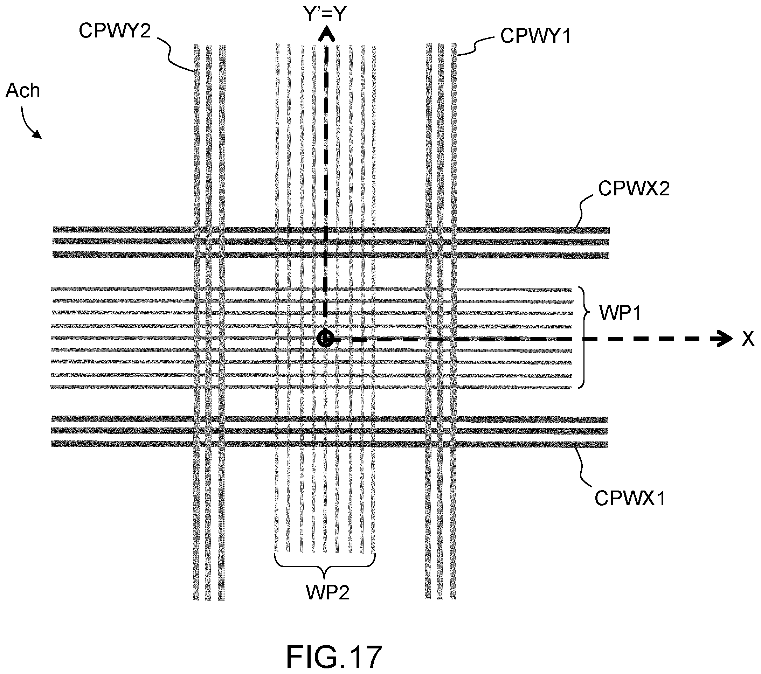

[Fig 17] La figure 17 illustre une première variante de puce atomique compatible 3 axes dans laquelle l'axe Y' coïncide avec Y et les deux pluralités de fils sont chacune parallèles à un axe.

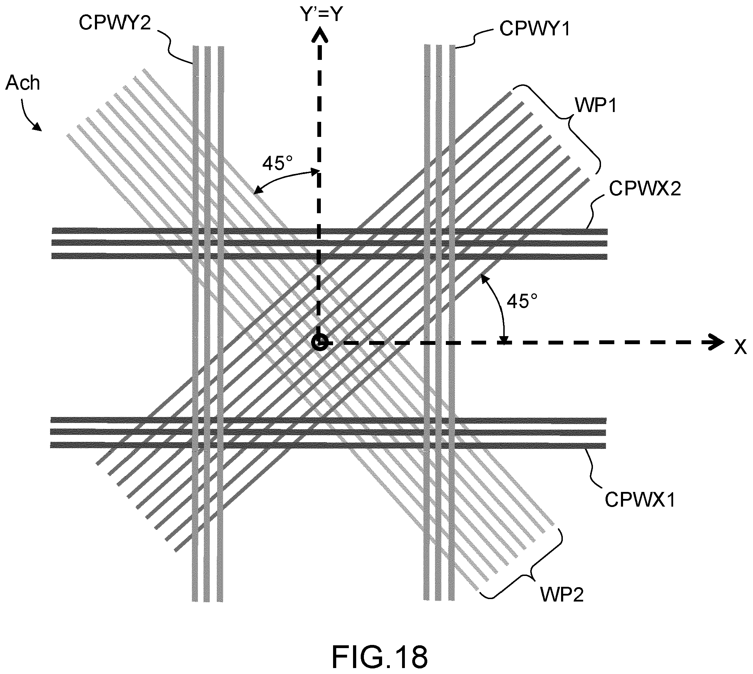

[Fig 18] La figure 18 illustre une deuxième variante de puce atomique compatible 3 axes dans laquelle l'axe Y' coïncide avec Y et les deux pluralités de fils sont perpendiculaires entre elles et font un angle de 45° avec les axes X et Y.

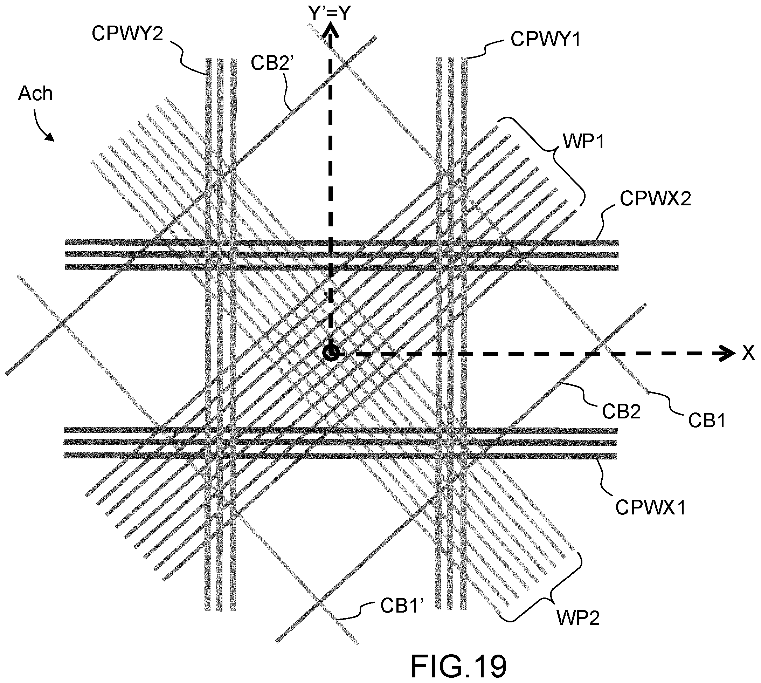

[Fig 19] La figure 19 illustre une sous variante de la variante de la figure 18 dans laquelle la génération du champ magnétique homogène, également dénommé champ de biais, est intégrée à la puce atomique par ajout de fils conducteurs.

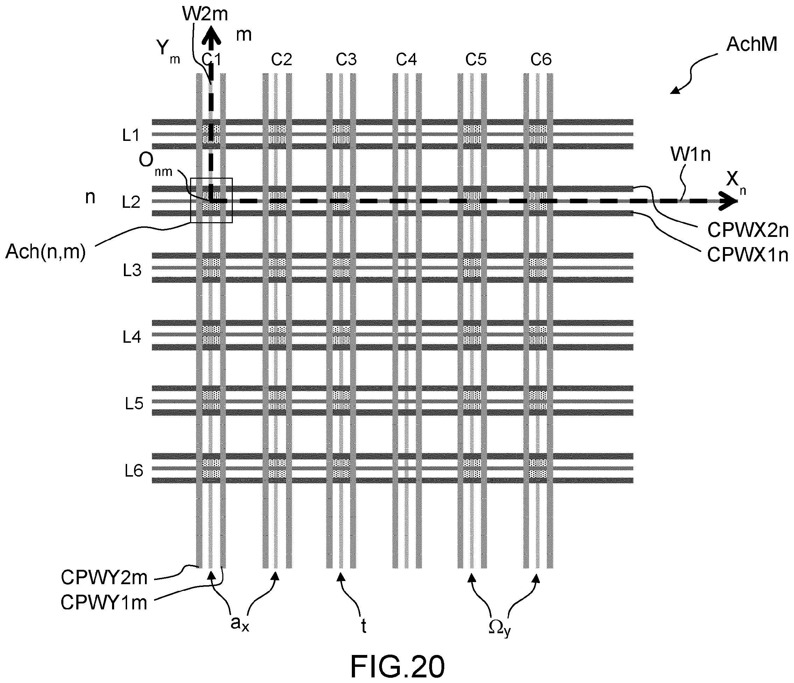

[Fig 20] La figure 20 illustre un premier exemple d'utilisation non limitatif d'une première variante de puce matricielle selon l'invention pour réaliser un ensemble de mesure.

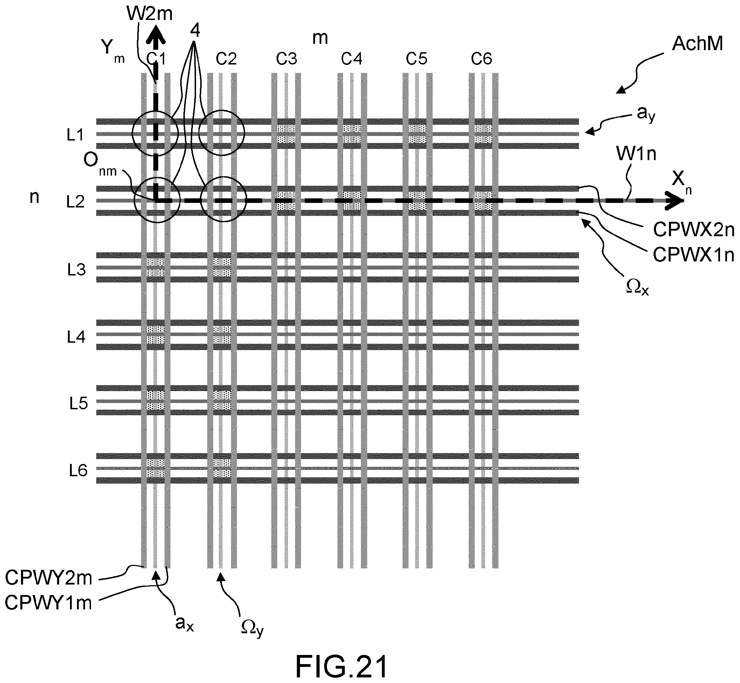

[Fig 21] La figure 21 illustre un autre exemple non limitatif d'utilisation de la première variante de puce matricielle.

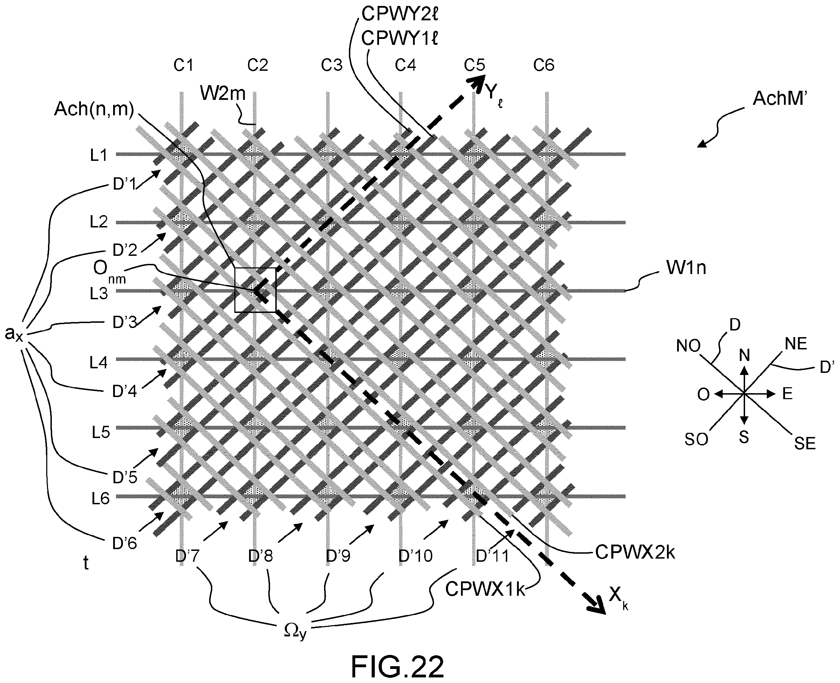

[Fig 22] La figure 22 illustre un premier exemple d'utilisation non limitatif d'une deuxième variante de la puce matricielle pour réaliser un ensemble de mesure.

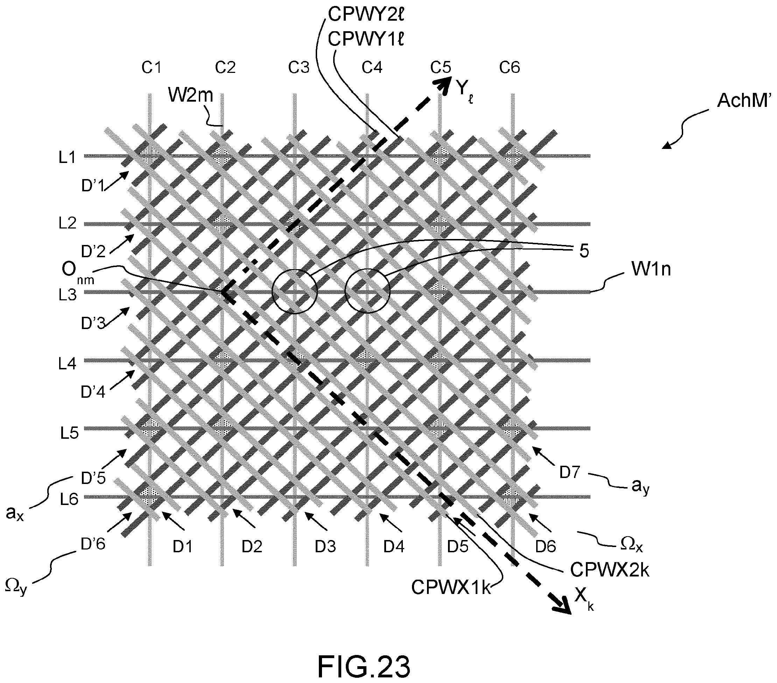

[Fig 23] La figure 23 illustre un autre exemple non limitatif d'utilisation d'une deuxième variante de la puce matricielle selon l'invention.

## DESCRIPTION DETAILLEE DE L'INVENTION

Selon un premier aspect l'invention concerne une puce atomique Ach pour capteur à atomes ultrafroids telle qu'illustrée figure 4. La surface de la puce atomique définit un plan XY, normal à un axe Z.

La puce atomique comprend un premier guide d'onde CPWX1 et un deuxième guide d'ondes CPWX2 coplanaires, adaptés à la propagation d'ondes hyperfréquences à des pulsations respective $\omega_a$ et $\omega_b$, disposés symétriquement de part et d'autre de l'axe X. Ces deux guides sont dénommés guides selon X.

La puce atomique comprend également un premier guide d'onde CPWY'1 et un deuxième guide d'ondes CPWY'2 coplanaires, adaptés à la propagation d'ondes hyperfréquences à des pulsations respective $\omega'_a$ et $\omega'_b$, disposés symétriquement de part et d'autre d'un axe dont la projection dans le plan XY (qui est perpendiculaire à l'axe Z) est selon un axe Y' compris dans le plan XY. Ces deux guides sont dénommés guides selon Y'.

Les guides selon X sont isolés électriquement des guides selon Y'. Préférentiellement ils sont disposés selon sur un niveau différent (voir figure 5). Ainsi dans l'hypothèse non limitative selon laquelle les guides selon X occupent le niveau correspondant à la surface, l'axe de symétrie des deux guides d'onde CPWY'1 et CPWY'2 se trouve dans le plan d'un autre niveau, et ainsi c'est bien la projection de cet axe de symétrie dans le plan XY, dénommé Y', qui est situé dans le plan XY. L'axe Y' étant différent de X, les deux ensemble de guides définissent une intersection qui formant un parallélogramme de centre O. Ce point O définit une origine du repère XYZ. Dans la suite, pour des questions de clarté, les caractéristiques géométriques des différents éléments d'intérêt sont définies par rapport au repère OXYZ. Le plan XY est également dénommé plan horizontal.

La puce atomique Ach comprend également au moins un premier fil conducteur W1 et un deuxième fil conducteur W2 adaptés à être traversés par des courants continus. En outre les projections respectives dans le plan XY de W1 et W2 sont sécantes en O et forment entre elles un angle supérieur ou égal à 20°. Pour plus de clarté les fils et les guides d'ondes selon Y' sont représentés dans le plan XY dans l'ensemble des figures.

La figure 5 illustre un mode de réalisation préféré de la puce atomique selon l'axe Z selon une coupe dans le plan OXZ. Les deux fils W1 et W2 peuvent être sur un même niveau ou isolés électriquement l'un de l'autre. Dans ce dernier cas les deux fils W1 et W2 occupent alors deux niveaux différents, comme les guides d'onde. Ainsi selon un mode de réalisation les guides d'onde selon X CPWX1 et CPWX2, les guides selon Y CPWY'1 et CPWY'2, le premier fil conducteur W1 et le deuxième fil conducteur W2 sont chacun disposés sur un niveau différent, chaque niveau étant isolé électriquement des niveaux voisins : un niveau N(CPW/X) pour les guides selon X, un niveau N(CPW/Y') pour les guides selon Y', un niveau N(W1) pour le premier fil conducteur et un niveau N(W2) pour le deuxième fil conducteur. Les 4 niveaux forment un empilement Emp disposé sur un substrat Sub. Les guides d'onde et les fils conducteurs sont de nature similaire à ceux décrits dans le document WO2017089489. Typiquement les fils et les guides sont en or ou en cuivre, isolés par une couche d'un matériau choisi parmi AlN, $SiO_2$, $Si_3N_4$, les couches étant déposées sur un substrat Sub en AlN, ou en silicium, ou en $SiO_2$, ou en SiC.

La puce atomique Ach diffère de la puce décrite dans le document WO2017089489 d'une part par la présence de 4 guides d'onde (au lieu de deux), par le nombre de fils (seulement 2) et par le l'agencement spécifique de ces deux fils conducteurs par rapport aux 4 guides d'onde. Il sera montré plus loin comment cette géométrie originale permet, lorsque la puce est intégrée à un capteur inertiel, de réaliser deux trajectoires fermées TX et TY' destinées à être parcourues par les deux nuages N1 et N2 d'atomes froids 12, ces trajectoires étant comprises non pas dans un plan parallèle au plan XY comme dans le document précité, mais dans deux plans perpendiculaires à XY ou verticaux, le plan YZ perpendiculaire à X pour TX, tel qu'illustré figure 6, et le plan XZ perpendiculaire à Y' pour TY'.

La réalisation de ces deux trajectoires permet ainsi au capteur intégrant une puce Ach de mesurer deux vitesses de rotation $\Omega x$ et $\Omega y'$, respectivement par rapport aux axes X et Y' (voir plus loin).

Les figures 7 à 10 illustres à titre non limitatif différentes variantes d'agencement des guides d'onde et des fils.

Selon une première variante illustré figure 7 la projection dans le plan XY du premier fil conducteur W1 est orientée selon l'axe X et la projection dans le plan XY du deuxième fil conducteur W2 est orientée selon l'axe Y'.

Selon une deuxième variante l'axe Y' se confond avec l'axe Y, tel qu'illustré figure 8. Les deux ensembles de guide sont alors perpendiculaire entre eux, ce qui permet une mesure de la vitesse de rotation selon deux axes perpendiculaires entre eux, ce qui est souvent souhaité.

La figure 9 illustre la combinaison de la première et de la deuxième variante.

Selon une troisième variante illustrée figure 10, l'axe Y' se confond avec l'axe Y et les projections respectives du premier fil conducteur et du deuxième fil conducteur dans le plan XY sont perpendiculaires entre elles, et respectivement orientées à 45° des axes X et Y. Cette troisième variante présente l'intérêt de pouvoir orienter les axes propres des pièges perpendiculairement aux guides.

Selon un autre aspect l'invention concerne un capteur à atomes ultrafroids 20 permettant une mesure de vitesse de rotation selon au moins deux axes X et Y' tel qu'illustré figure 11.

Le capteur comprend une puce atomique Ach telle que décrite précédemment placée dans un enceinte à vide et une source d'atomes S agencée pour générer un nuage d'atomes ultrafroids 12 près du plan XY de la puce atomique Ach. Les atomes ultrafoids présentent, lors de la phase d'initialisation de la mise en œuvre du capteur, une superposition d'états internes |a> et |b>.

Le capteur 20 comprend également un générateur GB d'un champ magnétique homogène B0, préférentiellement parallèle au plan de la puce, au moins un processeur UT, au moins un générateur de tension ou de courant continu GDC adapté à commander des courants électriques dans lesdits fils conducteurs et au moins un générateur de tension ou de courant micro-ondes GMW connecté audits guides d'ondes. Typiquement il peut y avoir un générateur GMW pour les 4 guides, ou 2 générateurs (1 pour chaque couple de guide) ou 4 générateurs (1 par guide). Les guides d'ondes selon X et Y', les fils conducteurs W1 et W2, et le cas échéant le champ magnétique, sont configurés pour réaliser les étapes suivantes lors de la mise en œuvre du capteur :

D'abord l'énergie des atomes ultrafroids est modifiée de manière à créer un minima de potentiel pour les atomes ultrafroids dans l'état interne |a> et un minima de potentiel pour les atomes ultrafroids dans l'état interne |b>, formant ainsi un premier piège T1 et deuxième piège T2 à atomes ultrafroids, un piège permettant d'immobiliser un nuage d'atomes ultrafroids 12 dans un état interne différent de l'autre piège, à une distance maîtrisée du plan de mesure (idem étapes A0 et B0).

Puis les deux pièges T1 et T2 sont séparés spatialement et déplacés suivant une première trajectoire TX fermée comprise dans un plan perpendiculaire à X et une deuxième trajectoire fermée TY' comprise dans un plan perpendiculaire à Y'.

Chaque trajectoire est parcourue dans un sens par les atomes ultrafroids du premier piège et dans le sens opposé par les atomes ultrafroids du deuxième piège.

Le capteur comprend également un système de détection d'intensité optique SDET adapté à mesurer au moins une population d'atomes ultrafroids dans un des états internes.

Pour mesurer la vitesse de rotation $\Omega x$ selon l'axe X c'est la trajectoire TX qui est générée via les guides d'onde, les fils conducteur et le champ B0. De même pour mesurer la vitesse de rotation $\Omega y'$ selon l'axe Y' c'est la trajectoire TY' qui est générée via les guides d'onde, les fils conducteur et le champ B0.

La séparation des pièges est identique à celle réalisée dans le document WO2017089489, mais ensuite la trajectoire suivie par les nuages d'atomes N1 et N2 respectivement piégés dans les pièges T1 et T2 est différente. Il ne s'agit plus ici de décrire une trajectoire dans un plan horizontal mais dans un plan vertical comme expliqué plus haut. Les inventeurs ont mis au point une manière de réaliser une telle trajectoire, en modifiant la hauteur à laquelle les nuages sont piégés.

La figure 12 illustre le trajet suivi par les deux nuages d'atomes N1 et N2 à plusieurs instants t0 à t6 pour former une boucle fermée, pour l'exemple de la trajectoire TX. Pour plus de clarté seuls les guides d'ondes CPWX1 et CPWX2 utilisés pour la réalisation de la trajectoire TX sont représentés. Pour chaque instant la partie supérieure de la figure associée illustre la position des deux nuages dans le plan XY et la partie inférieure illustre la position des deux nuages en vue de profil.

La figure 13 décrit le chronogramme des courants appliqués aux deux fils conducteurs, la puissance et la fréquence appliquée aux guides microonde et la valeur du champ magnétique homogène B0 sur la durée entre t0 et t6.

Au départ en t0 une valeur Iw1' du courant Iw1 est appliquée au fil W1 et une valeur Iw2' du courant Iw1 est appliquée au fil W2, aucune puissance microonde n'est appliquée tandis que le champ magnétique B0 présente une valeur absolue |B0'|. Les deux pièges ne sont pas encore séparés et le nuage est situé au-dessus de l'intersection des deux fils, c'est-à-dire au-dessus du point O, à une première hauteur h1 du plan XY. Ce point de départ est identique au point de départ t1 de la figure 3.

En t1 les deux nuages sont séparés et se sont éloignés d'une distance d de l'axe X, par application d'une puissance microonde sur les deux guides, à une fréquence $\omega a$ pour CPWX1 et $\omega b$ pour CPWX2. Une première portion de la trajectoire TX à une hauteur h1 est parcoure par les atomes (voir également figure 6). Cette portion de trajectoire est sensiblement identique à celle parcourue à l'instant t2 de la figure 3.

Ensuite, les atomes sont amenés à une deuxième hauteur h2 en t2 (ici dans l'exemple h1<h2) par modification de la valeur du courant circulant dans les fils et/ou par modification de la valeur du champ B0. Une portion sensiblement verticale de la trajectoire est alors parcourue, sur une distance w= h2-h1.

Pour atteindre une hauteur supérieure à la hauteur initiale il convient d'augmenter la valeur du courant de Iw1' à Iw1" (Iw1' < Iw1") circulant dans W1 et d'augmenter la valeur du courant de Iw2' à Iw2" (Iw2' < I$_{W2}$") circulant dans W2. Un effet similaire est obtenu par diminution de la valeur du champ magnétique B0 de |B0'| à |B0"| (|B0'| > |B0"|). En utilisant conjointement des deux modifications, comme dans l'exemple de la figure 13, on augmente la valeur de la hauteur finale atteinte. Le calcul du champ magnétique généré par la structure permet d'établir que la distance du piège au plan XY est environ proportionnelle à Iw1+Iw2 et inversement proportionnelle à |B0|.

Dans l'exemple une hauteur h2>h1 est atteinte. Du fait de l'éloignement du plan XY les deux nuages ne sont pas nécessairement distants d'une distance 2d lorsqu'ils passent de h1 à h2, cette distance ayant tendance à changer au fur et à mesure que l'on s'éloigne du plan. Ainsi la trajectoire peut avoir sensiblement une forme de parallélogramme plutôt que de rectangle.

En t3 les deux nuages sont ramenés sur l'axe X toujours à la hauteur h2 par diminution progressive jusqu'à annulation de la puissance appliquée aux guides d'ondes, les nuages parcourant alors une deuxième portion, sensiblement horizontalement, de trajectoire à la hauteur h2. L'autre partie de la deuxième portion de trajectoire à h2 de l'autre côté de l'axe X (t4, t5) est obtenue par inversion des valeurs des fréquences des microondes appliquées au guides CPWX1 et CPWX2. Puis une redescente à la hauteur h1 en t5 est réalisée en revenant aux valeurs initiales lw1' (pour W1) et lw2' (pour W2) des courants circulant dans les fils conducteurs et à la valeur initiale du champ magnétique (|B0'|). Les deux nuages se rejoignent enfin en t6 par annulation de la puissance microonde appliquée aux guides.

De manière similaire une trajectoire TY' est parcourue par « allumage » des guides d'ondes CPWY1 et CPWY2 à la place des guides CPWX1 et CPWX2. Les valeurs des fréquences des guides ω'a et w'b peuvent être identiques ou différentes des valeurs ωa et ωb.

Pour mesurer les vitesses de rotation $\Omega x$ et $\Omega y'$ selon respectivement les axes X et Y' avec le capteur 20, il faut que les nuages d'atomes ultrafroids piégés parcourent au moins une fois la trajectoire TX (au moins 1 tour, mais on peut également faire N tours) et au moins une fois la trajectoire TY' (au moins 1 tour, mais on peut également faire M tours). Ces deux trajectoires sont parcourues successivement dans le temps. Le point de départ de la trajectoire, ici O, est dénommé point de croisement d'initialisation.

Ainsi dans le capteur inertiel 10 deux axes selon l'invention les guides d'ondes CPWX1, CPWX2, CPWY1, CPWY2 et l'au moins un générateur de tension ou de courant micro-ondes GMW, les fils conducteurs W1, W2 et l'au moins un générateur de tension ou de courant continu GDC et le générateur du champ magnétique homogène GB, sont configurés, via au moins un processeur UT, pour que la première trajectoire fermée TX et la deuxième trajectoire fermée TY' (comprises respectivement dans un plan perpendiculaire à X et dans un plan perpendiculaire à Y') comprennent au moins une première portion localisée à une première hauteur h1 du plan XY et une deuxième portion localisée à une deuxième hauteur h2, avec h2>h1, et pour opérer un passage de h1 à h2 par :

- une augmentation d'une valeur du courant continu traversant respectivement chaque fil conducteur, entre une première valeur ($I_{W1}'$ pour W1 ; $I_{W2}'$ pour W2) et une deuxième valeur ($I_{W1}''$ pour W1 ; $I_{W2}''$ pour W2) non nulles, et/ou,
- une diminution d'une valeur du champ magnétique homogène entre une première valeur absolue |B0'| et une deuxième valeur absolue |B0''| non nulles.

Inversement on passe des deuxièmes valeurs aux premières valeurs pour un passage de la deuxième hauteur h2 à la première hauteur h1.

Le capteur selon l'invention permet de réduire les problèmes de calage d'axes car sur une même puce l'orthogonalité des axes de mesure est directement déterminée par la géométrie des fils de la puce atomique. Les procédés de microélectronique utilisés pour la réalisation des puces atomiques permettent une réalisation très précise de la géométrie de fils voulue et donc le contrôle de l'orthogonalité des axes du capteur.

Selon un autre aspect l'invention concerne un procédé 100 de mesure d'une vitesse de rotation autour de deux axes X et Y' par un capteur à atomes ultrafroids comprenant une puce atomique telle que décrite précédemment.

Le procédé décrit ci-dessous comprend permet la mesure de la vitesse de rotation selon un des axes X ou Y' dénommé axe de mesure. Pour effectuer une mesure selon les deux axes, le procédé est ensuite mis en œuvre également pour l'autre axe de mesure.

Dans une étape **A** on génère un nuage d'atomes ultrafroids 12, cette génération incluant des phases d'émission de refroidissement des atomes, d'initialisation des atomes dans au moins un état interne |a> et de piégeage d'un nuage d'atomes ultrafroids dans un minimum local de potentiel, à une première hauteur (h1) du plan XY. Le piégeage s'effectue par passage de courants continus dans le premier et le deuxième fil conducteurs. Cette étape est identique à l'étape A0 décrite dans l'état de la technique. Les atomes sont piégés à la hauteur h1 au-dessus du point O, point de croisement entre les fils W1 et W2.

Dans une étape **B** on initialise les états internes en superposant de manière cohérente les atomes ultrafroids entre les états |a> et |b> par une première impulsion $\pi / 2$. Cette étape est identique à l'étape B0 décrite dans l'état de la technique. Les deux états internes |a> et |b> sont superposés de manière cohérente et spatialement à l'aplomb du point O.

Dans une étape **C** tout d'abord on sépare spatialement un nuage d'atomes d'état interne la> dans un piège T1 d'un nuage d'atomes d'état interne |b> dans un autre piège T2, de manière identique à l'état de la technique. Puis on déplace les pièges en sens opposé suivant une trajectoire fermée contenue dans un plan perpendiculaire à l'axe de mesure et initialisée à la verticale du point O. Ici la trajectoire s'effectue dans un plan vertical, perpendiculaire à X ou Y', contrairement à l'état de la technique où la trajectoire s'effectue dans un plan parallèle au plan XY. La trajectoire TX ou TY' comprend une première portion P1 sensiblement parallèle à XY et à une hauteur h1 et une deuxième portion P2 également sensiblement parallèle à XY mais à une deuxième hauteur h2 différente de h1 (voir figure 6). La trajectoire fermée contient une aire A1 (TX) ou A2 (TY'), la fonction atomique est donc:

$$\frac{|a> + \exp(i\varphi)|b>}{\sqrt{2}} \qquad (7)$$

Avec (pour A1)

$$\varphi \ = \ \omega_0 t + \frac{m}{\hbar}\Omega_x A_1 \qquad (8)$$

Le parcours de la trajectoire, incluant le changement d'altitude des nuages d'atomes piégés, est obtenu en appliquant une tension ou un courant à fréquences micro-ondes prédéterminées aux premiers et deuxième guides selon l'axe de mesure (pour séparer les pièges), en alternant les fréquences microonde pour intervertir les deux nuages, en appliquant au moins deux valeurs différentes de tension ou de courant continu aux premier et deuxième fils conducteurs (valeurs non nulles) et/ou en appliquant au moins deux valeurs différentes d'un champ magnétique homogène, les différentes applications s'effectuant selon une séquence prédéterminée, comme expliqué figures 11 et 12.

Il ne s'agit pas ici de parcourir une trajectoire parallèlement au plan XY selon à une hauteur fixe, en « allumant » successivement les points de croisement, comme décrit dans l'étape C0 de l'état de la technique. Ici il n'y a qu'un seul point de croisement, O, et la trajectoire est parcourue à deux hauteurs différentes.

Une fois que chaque nuage a parcouru au moins une fois la trajectoire fermée, dans une étape **D** on recombine les états internes |a> et |b> en appliquant aux atomes ultrafroids une deuxième impulsion $\pi$ / **2** puis on mesure la densité d'atomes dans un état interne choisi parmi |a> ou |b> (idem à l'état de la technique).

Enfin dans une étape **E,** on détermine en utilisant la formule (8) la phase Sagnac des atomes ultrafroids et la vitesse de rotation du capteur selon l'axe de mesure, ici X ou Y'.

Selon un mode de réalisation le capteur 20 est configuré pour effectuer également une mesure d'horloge. Pour cela on met en œuvre les étapes A, B, D et E. L'étape C est remplacée par une étape CHor où les puissances dans les guides d'ondes restent nulles et les courants dans les fils W1 et W2 restent constant. A l'issue de l'étape CHor la fonction d'onde est:

$$\frac{|a> + \exp(i\varphi)|b>}{\sqrt{2}}$$

avec :

$$\varphi = \omega_0 t$$

Pendant l'étape CHor, l'oscillateur réalisant les impulsions $\pi/2$ accumule une phase $\omega t$ où $\omega/2\pi$ est la fréquence de l'oscillateur.

Ensuite, dans une étape similaire à l'étape D, une seconde impulsion $\pi/2$ transfert la différence des phases sur les populations des deux niveaux atomiques :

$$p_a = \frac{1}{2}[1 + \cos(\varphi - \omega t)]$$

$$p_b = \frac{1}{2}[1 - \cos(\varphi - \omega t)]$$

L'étape E permet de mesurer au moins une des deux populations ce qui permet de connaître l'écart entre la référence de fréquence donnée par les atomes $\omega_0/2\pi$ et la fréquence de l'oscillateur $\omega/2\pi$.

Selon un mode de réalisation le capteur 20 est configuré pour effectuer également une mesure d'accélération selon au moins l'un des axes de X ou Y' dénommé axe de mesure. L'exemple donné ci-après illustre la mesure de l'accélération $a_x$ selon X.

Pour cela on met en œuvre l'étape A et l'étape B, puis pendant le temps Ramsey dans une étape CAc on allume progressivement les champs microondes dans les deux guides micro-ondes perpendiculaires à l'axe de mesure, ici X. En choisissant les bonnes fréquences pour les deux champs micro-ondes (voir la référence Ammar, M.; Dupont-Nivet, M.; Huet, L.; Pocholle, J.-P.; Rosenbusch, P.; Bouchoule, I.; Westbrook, C. I.; Estève, J.; Reichel, J.; Guerlin, C. & Schwartz, S. « Symmetric microwave potentials for interferometry with thermal atoms on a chip » Phys. Rev. A, American Physical Society, 2015, 91, 053623 Physical Review A, 91, 053623, 2015) cela permet de séparer spatialement les deux états |a> et |b> suivant l'axe X d'une distance d.

Ainsi pendant l'étape CAc la phase accumulée est :

$$\varphi = \omega_0 t + \frac{m a_x dt}{\hbar}$$

Puis à la fin de l'étape CAc on éteint progressivement les deux champs microondes pour recombiner les deux états.

Enfin dans une étape similaire à l'étape D, une seconde impulsion $\pi/2$ transfert la différence des phases sur les populations des deux niveaux atomiques :

$$p_a = \frac{1}{2}[1 + \cos(\varphi - \omega t)]$$

$$p_b = \frac{1}{2}[1 - \cos(\varphi - \omega t)]$$

Dans une étape similaire à l'étape E, la population dans au moins un des deux états la> ou |b> est mesurée pour connaitre l'accélération. Ainsi pour cette mesure d'accélération selon un axe, les nuages d'atomes parcourent une trajectoire unidimensionnelle selon ce même axe.

Pour mesurer l'accélération $a_{y'}$ selon Y', on procède comme pour l'accéléromètre suivant l'axe X, mais les deux champs micro-ondes sont envoyés dans les guides perpendiculaires à Y' (au lieu des guides perpendiculaires à X). Cela permet de séparer les états |a> et |b> suivant l'axe Y'. Ainsi de la même manière la phase accumulée est :

$$\varphi = \omega_0 t + \frac{m a_y dt}{\hbar}$$

L'invention concerne également une puce atomique comprenant en outre une pluralité de fils conducteurs disposés parallèlement au premier fil conducteur W1, formant une première pluralité de fils conducteurs WP1 et une pluralité de fils conducteurs disposés parallèlement au deuxième fil conducteur W2, formant une deuxième pluralité de fils conducteurs WP2, comme illustré figure 14. Un fil de la première pluralité est indicé i (i indice variant de 1 à I) et un fil de la deuxième pluralité est indicé j (j indice variant de 1 à J). Typiquement I et J sont de l'ordre de quelques fils à une/quelques dizaine de fils. Les deux pluralités de fils sont situées sur un niveau différent et isolée électriquement l'une de l'autre.

La projection dans le plan XY d'un fil WP1(i) de la première pluralité et d'un fil WP2(j) de la deuxième pluralité définissent un point de croisement C(i,j) sur le plan XY. Les fils étant disposés dans deux plans différents ils ne se croisent pas physiquement sur le pan XY. Le point de croisement a pour fonction de repérer les deux fils conducteurs qui le définissent, et on dit que le point de croisement est « allumé » lorsqu'un courant ou une tension continue et appliquée dans ces deux fils. Par ailleurs la première et la deuxième pluralité de fils conducteurs sont agencées de sorte qu'au moins une partie des points de croisement est à l'intérieur du parallélogramme constitué par les quatre guides d'ondes. Le point O est un point de croisement de cette partie parmi d'autres.

L'utilisation d'une puce ayant cette structure particulière dans un capteur permet à celui-ci de réaliser une mesure selon trois axes X, Y' et Z. L'invention concerne également un tel capteur 3 axes 30.

La mesure des vitesses de rotation selon X et Y' du capteur 3 axes selon l'invention s'effectue de la même manière que précédemment, à la différence qu'ici les trajectoires fermées TX et TY' peuvent être initialisée à partir d'un point de croisement différent de O, dénommés respectivement premier point de croisement d'initialisation Cx et deuxième point de croisement d'initialisation Cy. Pour un bon fonctionnement du capteur, Cx est préférentiellement situé sur l'axe X (à égale distance des deux guides selon X) et Cy sur l'axe Y' (à égale distance des guides selon Y'). Pour simplifier la mise en œuvre du capteur, préférentiellement les points Cx et CY coïncident avec O.

La mesure de la vitesse de rotation selon Z s'effectue comme décrit dans l'état de la technique en parcourant une trajectoire TZ comprise dans un plan parallèle à au plan de la puce XY. La trajectoire Tz est initialisée à partir d'un troisième point de croisement Cz. Pour générer cette trajectoire on peut utiliser les guides d'ondes selon X ou les guides d'onde selon Y'. Si l'on choisit d'utiliser les guides d'onde selon X, préférentiellement les pluralités WP1 et WP2 sont agencées de manière à ce qu'il existe des points de croisement, y compris Cz (qui vont être allumés pour parcourir la trajectoire TZ), qui soient disposés sur l'axe X. De même si l'on choisit d'utiliser les guides d'onde selon Y', préférentiellement il faut qu'il existe des points de croisement (à allumer), y compris Cz, sur l'axe Y'.

Ainsi les pluralités de fils WP1 et WP2 sont donc préférentiellement configurées de sorte qu'une sous-partie de la partie des points de croisement disposée à l'intérieur du parallélogramme est située sur l'axe X et qu'une autre sous partie est située sur l'axe Y', comme illustré figure 13.

La figure 15 illustre la trajectoire TZ des deux nuages d'atomes piégés en utilisant les guides selon X (seuls représentés), par allumage successif de 3 points de croisement C(1,1), C(2,2) et C(3,3) puis retour, pour 8 instants t1 à t8 La figure 16 illustre le chronogramme associés des valeurs des courants appliqués aux fils concernés, des puissances et fréquence microonde appliquées aux guides selon X et du champs magnétique homogène en fonction du temps entre t1 et t8. La trajectoire TZ s'effectuant à une hauteur h fixe, le champ homogène appliqué a une valeur absolue constante et le courant dans les fils conducteurs ne prend qu'une seule valeur maintenue entre les instants d'intérêt.

Une mesure redondante, et donc plus précise, de la vitesse de rotation selon Z $\Omega_z$ peut être obtenue en effectuant successivement cette mesure en allumant les guides d'onde selon X (et les points de croisement associés) et les guides d'ondes selon Y' (et les points de croisement associés).

Pour une simplification de mise en œuvre du capteur, préférentiellement le point Cz coïncide avec O, qui est le point d'initialisation compatible avec la mise en œuvre des deux mesures redondantes à partir d'un même point d'initialisation.

Ainsi le capteur 3 axes 30 permet une mesure des vitesse de rotation $\Omega_x$, $\Omega_y$, $\Omega_z$, et des accélérations $a_x$ et $a_y$.

L'invention concerne également un procédé de mesure d'une vitesse de rotation selon trois axes X, Y' et Z par un capteur à atomes froid comprenant une puce atomique compatible d'une telle mesure, telle que décrite figures 14 et figures 17,18 ou 19 (voir plus loin)

Pour mesure selon l'axe X, le procédé s'effectue de la même manière que pour une mesure selon deux axes, par la mise en œuvre des étapes A à E telle que décrites précédemment. La différence est qu'ici la première trajectoire fermée TX, comprise dans un plan perpendiculaire à X, est initialisée à partir d'un premier point de croisement d'initialisation Cx situé sur l'axe X, qui n'est pas nécessairement O.

De même pour mesure selon l'axe Y', le procédé s'effectue de la même manière que pour une mesure selon deux axes, par la mise en œuvre des étapes A à E telle que décrites précédemment avec une deuxième trajectoire fermée TY' comprise dans un plan perpendiculaire à Y' et initialisée à partir d'un deuxième point de croisement d'initialisation Cy situé sur l'axe Y'.

Pour la mesure de la vitesse de rotation selon l'axe Z, après la mise en œuvre des étapes A et B telle que décrites précédemment dans une étape **C'** on sépare spatialement un nuage d'atomes d'état interne Ia> dans un piège T1 et d'un nuage d'atomes d'état interne | b> dans un autre piège T2, et on déplace les pièges en sens opposé suivant une trajectoire fermée contenue dans un plan perpendiculaire à l'axe Z comme décrit par l'état de la technique, en allumant successivement les points de croisement d'intérêt. La trajectoire TZ est initialisée à partir d'un troisième point de croisement d'initialisation Cz. On peut choisir les guides d'onde selon X ou les guides d'onde selon Y' pour décrire cette trajectoire TZ, le point de croisement devant alors être disposé sur l'axe de symétrie des deux guides (X pour les guides selon X, Y' pour le guides selon Y'). L'étape C'est mise en œuvre par application d'une tension ou d'un courant à fréquences microondes prédéterminées aux premier et deuxième guides selon l'axe choisi, et en appliquant une tension ou un courant continu aux fils conducteurs de la première et de la deuxième pluralité de fils conducteurs selon une séquence prédéterminée, de manière à exciter successivement des points de croisement disposés sur ou au voisinage de l'axe choisi. Enfin on effectue les étapes D et E telles que décrites précédemment.

Les fils conducteurs de chaque pluralité présentent une largeur l et sont distants d'une distance d, non nécessairement égales pour tous les fils. Préférentiellement la largeur l et la distance d sont identiques pour tous les fils et vérifient :

$$l/2 \ \leq \ d \leq 2l$$

Cette condition permet de déplacer les pièges d'un point de croisement au suivant tout en minimisant les déformations des pièges.

Selon une première variante illustrée figure 17, l'axe Y' coïncide avec Y et les deux pluralités sont chacune parallèles à un axe.

Selon une deuxième variante illustrée figure 18, préférée, l'axe Y' coïncide avec Y, les deux pluralités de fils sont perpendiculaires entre elles et font un angle de 45° avec les axes X et Y. Cette géométrie permet d'orienter les axes propres des pièges perpendiculairement aux guides. Les pièges présentent une forme d'ellipsoïde et les axes propres sont les axes de cette ellipsoïde.

Selon une sous variante de la variante de la figure 18 illustrée figure 19, la génération du champ magnétique homogène, également dénommé champ de biais, est intégrée à la puce atomique par ajout de fils conducteurs.

Sur le niveau de WP1 sont ajoutés deux fils (CB1, CB1') parallèles entre eux, perpendiculaires aux fils de WP1 et disposée préférentiellement à l'extérieur du parallélogramme, de manière à appliquer, lorsqu'on applique un courant continu à ces deux fils, un champ de biais perpendiculaire à CB1 et CB1'. De même sur le niveau de WP2 sont ajoutés deux fils (CB2, CB2') perpendiculaires aux fils de WP2, de manière à appliquer un cham de biais perpendiculaire à CB2 et CB2'.

Cette configuration présente l'intérêt d'intégrer sur la puce la génération du champ de biais.

Selon un autre aspect l'invention concerne une puce atomique matricielle telle que décrite figures 20 à 23.

Selon une première variante de puce atomique AchM illustrée figures 20 et 21, celle-ci comprend un premier ensemble de premiers fils conducteurs W1n indicés n (N fils) et un deuxième ensemble de deuxième fils conducteurs W2m indicés m (M fils) perpendiculaires entre eux et formant respectivement des lignes et des colonnes d'une matrice. Chacun des premiers fils conducteur W1n est confondu avec un axe Xn (axe X indicé n) et chacun des deuxièmes fils conducteurs W2m est confondu avec un axe Ym (axe Y indicé m).

Avec cet agencement les guides CPWX1n, CPWX2n selon l'axe Xn sont ainsi communs à tous les pixels de la ligne n et les guides CPWY1m, CPWY2m selon l'axe Ym sont ainsi communs à tous les pixels la colonne m.

Chaque pixel de la matrice forme alors une puce élémentaire Ach(n,m) telle que décrite précédemment (voir figure 9). Les puces élémentaires agencées en matrice sont localisées sur le même substrat.

Intégrées à un capteur, les puces élémentaires permettent d'effectuer en parallèles plusieurs mesures d'une grandeur choisie entre ax et/ou ay et/ou Ωx et/ou Ωy. Elles peuvent également mesurer un temps t. Elles sont de plus reconfigurables pour pouvoir effectuer d'autres mesures lors d'une autre séquence.

La mesure de ax et $\Omega_y$ nécessite d'allumer les guides selon Y (colonnes) et la mesure de ay et Ωx nécessite d'allumer les guides selon X (lignes).

Préférentiellement chaque niveau, tel que décrit figure 2, comprend les éléments d'un type choisi parmi : guides coplanaires selon X1 à XN, guides coplanaires selon Y1 à YM, fils conducteurs WP11 à WP1N, fils conducteurs WP21 à WP2M.

La figure 20 illustre un premier exemple d'utilisation non limitatif de la puce matricielle AchM pour réaliser un ensemble de mesure.

Dans cette exemple on a N=M=6. On utilise les colonnes C1 et C2 pour la mesure de ax, les colonnes C5 et C6 pour les mesures de $\Omega_y$ et la colonne C3 pour mesurer le temps t. L'accélération ax et la vitesse de rotation sont chacune mesurées en parallèle par 2x6 puces élémentaires, et le temps par 6 puces, ce qui permet une mesure plus précise. La colonne C4 est inutilisée dans cette séquence de mesure.

Les puces utilisées pour une mesure apparaissent grisées pour plus de clarté.

La figure 21 illustre un autre exemple non limitatif d'utilisation de la puce matricielle AchM. Les puces de la colonne C1 mesurent ax, les puces de la colonne C2 mesurent $\Omega y$, les puces de la ligne L1 mesurent ay et les puces de la ligne L2 mesure $\Omega x$. Comme une mesure nécessite une séquence particulière pour les guides coplanaires nécessaires, ceux-ci ne peuvent être partagés pour 2 mesures simultanément de deux paramètres inertiels distincts. Ainsi les puces élémentaires 4 entourées d'un cercle ne sont pas utilisées.

La puce matricielle est ainsi reconfigurée selon les besoins : le type de mesure souhaité (ax, ay, $\Omega x$, $\Omega y$, t), la précision souhaitée (fonction du nombre de puce réalisant simultanément la mesure), etc... On réalise ainsi sur une même puce matricielle des mesures en parallèle, redondantes et/ou complémentaires.

Cette variante présente l'intérêt d'être facilement pilotable mais l'orientation des pièges (axes propres) par rapport aux guides d'onde ne sont pas optimales.

Selon une deuxième variante de puce atomique AchM' illustrée figures 22 et 23, celle-ci comprend un premier ensemble de premiers fils conducteurs W1n et un deuxième ensemble de deuxième fils conducteurs W2m perpendiculaires entre eux et formant respectivement des lignes et des colonnes d'une matrice, comme précédemment.

Chacun des premiers fils conducteurs indicés n et des deuxièmes fils conducteurs indicés m est orientés respectivement à 45° d'un axe Xk et à 45° d'un axe Yl (puce élémentaire similaire à la figure 10). Les guides CPWX1k, CPWX2k selon l'axe Xk sont ainsi communs à tous les pixels d'une première diagonale Dk de la matrice et les guides CPWY1l, CPWY2l selon l'axe Yl étant ainsi communs à tous les pixels d'une deuxième diagonale Dl'.

La figure 22 illustre un premier exemple d'utilisation non limitatif de la puce matricielle AchM' pour réaliser un ensemble de mesure.

Dans cette exemple on a N=M=6. On utilise les 5 deuxièmes diagonales Sud Ouest-Nord Est D1' à D5' pour la mesure de ax, la sixième diagonale D6' pour la mesure de t et les septième à onzième diagonale D7' à D11' pour les mesures de $\Omega y$. Toutes les puces de la matrice AchM' sont utilisées dans cet exemple.

La figure 23 illustre un autre exemple non limitatif d'utilisation de la puce matricielle AchM'. La diagonale D5' mesure ax, la diagonale D6' mesure $\Omega y$.

La diagonale D6 mesure $\Omega x$, et la diagonale D7 mesure ay. Ainsi les puces élémentaires 5 entourées d'un cercle ne sont pas utilisées pour les même raisons que précédemment.

Cette variante est plus difficilement pilotable que la variante précédente mais présente l'intérêt d'une bonne orientation des pièges (axes propres) par rapport aux guides d'onde.

Afin de rendre accessible la mesure de $\Omega z$ à la puce matricielle, selon une troisième variante combinable avec les deux premières variantes, dans la puce matricielle au moins un fils conducteur du premier ou du deuxième ensemble est remplacé par une pluralité de fils conducteurs parallèles entre eux, une portion des fils conducteurs de ladite pluralité étant comprise dans les parallélogrammes (ici des rectangles) associés (voir puces élémentaire des figures 17 et 18).

Selon un autre aspect l'invention concerne un capteur 40 à atomes froids comprenant une puce matricielle AchM ou AchM' et comprenant également, comme les capteurs précédents :

- une source d'atomes S agencée pour générer un nuage d'atomes ultrafroids près du plan XY de ladite puce atomique,

- un générateur GB d'un champ magnétique homogène B0,

- au moins un processeur UT, au moins un générateur de tension ou de courant continu GDC adapté à commander des courants électriques dans les fils conducteurs et au moins un générateur de tension ou de courant micro-ondes GMW connecté aux guides d'ondes,

- un système de détection d'intensité optique SDET.

Ce capteur est adapté pour mesurer, à partir desdites puces élémentaires et selon les besoins et de manière reconfigurable, au moins une accélération ax ou ay et/ou une vitesse de rotation $\Omega x$ et/ou $\Omega y$, selon au moins une direction correspondant à celle des axes Xn et/ou des axes Ym. Il peut également être adapté à la mesure du temps et le cas échéant de la vitesse de rotation $\Omega z$ (troisième variante de puce atomique).

**Revendications**

1. Puce atomique (Ach) pour capteur inertiel à atomes ultrafroids, comportant un plan XY normal à un axe Z, la puce atomique comprenant :

   - un premier et un deuxième guide d'ondes (CPWX1, CPWX2) coplanaires adaptés à la propagation d'ondes hyperfréquences à des pulsations respective $\omega_a$ et $\omega_b$, disposés symétriquement de part et d'autre de l'axe X, dénommés guides selon X,
   - un premier et un deuxième guide d'ondes (CPWY'1, CPWY'2) coplanaires adaptés à la propagation d'ondes hyperfréquences à des pulsations respective $\omega'_a$ et $\omega'_b$, disposés symétriquement de part et d'autre d'un axe dont la projection dans le plan XY est selon un axe Y' différent de l'axe X et compris dans le plan XY, dénommés guides selon Y',

les guides selon X étant isolés électriquement des guides selon Y', une intersection desdits guides formant un parallélogramme de centre O définissant une origine du repère XYZ,

- au moins un premier fil conducteur (W1) et un deuxième fil conducteur (W2) dont les projections respectives dans le plan XY sont sécantes en O et forment entre elles un angle supérieur ou égal à 20°, lesdits fils conducteurs étant adaptés à être traversés par des courants continus.

2. Puce atomique selon la revendication précédente dans laquelle les guides selon X, les guides selon Y, le premier fil conducteur et le deuxième fil conducteur sont chacun disposés sur un niveau différent, chaque niveau étant isolé électriquement des niveaux voisins, lesdits niveaux formant un empilement (Emp) disposé sur un substrat (Sub).

3. Puce atomique selon l'une des revendications précédentes dans laquelle la projection dans le plan XY du premier fil conducteur (W1) est orientée selon l'axe X et la projection dans le plan XY du deuxième fil conducteur (W2) est orientée selon l'axe Y'.

4. Puce atomique selon l'une des revendications précédentes dans laquelle l'axe Y' se confond avec l'axe Y.

5. Puce atomique selon l'une des revendications 1 ou 2 dans laquelle l'axe Y' se confond avec l'axe Y, dans laquelle les projections respectives du premier fil conducteur et du deuxième fil conducteur dans le plan XY sont perpendiculaires entre elles et respectivement orientées à 45° des axes X et Y.

6. Puce atomique selon l'une des revendications précédentes comprenant en outre une pluralité de fils conducteurs disposés parallèlement audit premier fil conducteur, formant une première pluralité de fils conducteurs (W1P) et une pluralité de fils conducteurs disposés parallèlement audit deuxième fil conducteur, formant une deuxième pluralité de fils conducteurs (W2P), une projection dans le plan XY d'un fil de la première pluralité et d'un fil de la deuxième pluralité définissant un point de croisement sur le plan XY,

lesdites première et deuxième pluralité de fils conducteurs étant agencées de sorte qu'au moins une partie des points de croisement est à l'intérieur dudit parallélogramme.

7. Puce atomique selon la revendication précédente dans laquelle la première pluralité et la deuxième pluralité de fils conducteurs sont configurées de sorte qu'une sous-partie de ladite partie des points de croisement est située sur l'axe X et une autre sous partie de ladite partie des points de croisement est située sur l'axe Y'.

8. Puce atomique selon l'une des revendications 6 ou 7 dans laquelle les fils conducteurs présentent une largeur (l) et dans laquelle une distance (d) entre deux fils conducteurs voisins est comprise entre 0.5 fois et 2 fois ladite largeur.

9. Puce atomique selon l'une des revendications 1 ou 2 comprenant un premier ensemble de premiers fils conducteurs (W1n) indicés n et un deuxième ensemble de deuxième fils conducteurs (W2m) indicés m perpendiculaires entre eux et formant respectivement des lignes et des colonnes d'une matrice (AchM),

chacun des premiers fils conducteur indicé n et des deuxièmes fils conducteurs indicés m étant confondus respectivement avec un axe Xn indicé n et avec un axe Ym indicé m, les guides (CPWX1n, CPWX2n) selon l'axe Xn étant ainsi communs à tous les pixels de la ligne n et les guides (CPWY1m, CPWY2m) selon l'axe Ym étant ainsi communs à tous les pixels la colonne m, chaque pixel de la matrice formant une puce élémentaire (Ach(n,m)).

10. Puce atomique selon l'une des revendications 1 ou 2 comprenant un premier ensemble de premiers fils conducteurs (W1n) indicés n et un deuxième ensemble de deuxième fils conducteurs (W2m) indicés m perpendiculaires entre eux et formant respectivement des lignes et des colonnes d'une matrice (AchM'),

chacun des premiers fils conducteurs indicés n et des deuxièmes fils conducteurs indicés m étant orientés respectivement à 45° d'un axe Xk indicés k et à 45° d'un axe Yl indicés m, les guides (CPWX1k, CPWX2k) selon l'axe Xk étant ainsi communs à tous les pixels d'une première diagonale de la matrice et les guides (CPWY1l, CPWY2l) selon l'axe Yl étant ainsi communs à tous les pixels d'une deuxième diagonale, chaque pixel de la matrice formant une puce élémentaire (Ach(n,m)).

11. Puce atomique matricielle selon l'une des revendications 9 ou 10 dans laquelle au moins un fils conducteur du premier ou du deuxième ensemble est remplacé par une pluralité de fils conducteurs parallèles entre eux, une portion des fils conducteurs de ladite pluralité étant comprise dans les parallélogrammes associés.

12. Capteur inertiel à atomes ultrafroids (20) permettant une mesure de vitesse de rotation selon au moins deux axes X et Y' comprenant :

- une puce atomique (ACh) selon l'une des revendications 1 à 5 placée dans une enceinte à vide,
- une source d'atomes (S) agencée pour générer un nuage (12) d'atomes ultrafroids près dudit plan XY de ladite puce atomique, lesdits atomes ultrafoids présentant, lors de la phase d'initialisation de la mise en œuvre du capteur, une superposition d'états internes la> et |b>
- un générateur (GB) d'un champ magnétique homogène (B0),
- au moins un processeur (UT), au moins un générateur de tension ou de courant continu (GDC) adapté à commander des courants électriques dans lesdits fils conducteurs et au moins un générateur de tension ou de courant micro-ondes (GMW) connecté audits guides d'ondes,
- lesdits guides d'ondes, lesdits fils conducteurs et le cas échéant le champ magnétique étant configurés, lors de la mise en œuvre du capteur, pour :

- modifier l'énergie desdits atomes ultrafroids de manière à créer un minima de potentiel pour les atomes ultrafroids dans l'état interne la> et un minima de potentiel pour les atomes ultrafroids dans l'état interne |b>, formant ainsi un premier (T1) et deuxième (T2) pièges à atomes ultrafroids, un piège permettant d'immobiliser un nuage d'atomes ultrafroids (12) dans un état interne différent de l'autre piège, à une distance maîtrisée dudit plan de mesure, et
- séparer spatialement les deux pièges et déplacer lesdits pièges (T1, T2) suivant au moins une première (TX) trajectoire fermée comprise dans un plan perpendiculaire à X et une deuxième trajectoire fermée (TY') comprise dans un plan perpendiculaire à Y', chaque trajectoire étant parcourue dans un sens par les atomes ultrafroids du premier piège et dans le sens opposé par les atomes ultrafroids du deuxième piège,

- le capteur comprenant en outre un système de détection d'intensité optique (SDET) adapté à mesurer au moins une population de dits atomes ultrafroids dans un dit état interne.

**13.** Capteur deux axes selon la revendication 12 dans lequel lesdits guides d'ondes et l'au moins un générateur de tension ou de courant micro-ondes, lesdits fils conducteurs et l'au moins un générateur de tension ou de courant continu, et le générateur du champ magnétique homogène, sont configurés pour que la première (TX) et la deuxième (TY') trajectoire fermée comprennent chacune au moins une première portion localisée à une première hauteur (h1) du plan XY et une deuxième portion localisée à une deuxième hauteur (h2) strictement supérieure à la première hauteur, et pour opérer un passage de la première hauteur à la deuxième hauteur par :

- une augmentation de la valeur du courant continu traversant chaque fil conducteur, entre une première valeur ($I_{W1}$', $I_{W2}$') et une deuxième valeur ($I_{W1}$", $I_{W2}$") non nulles et/ou,
- une diminution d'une valeur du champ magnétique homogène entre une première valeur (B0') et une deuxième valeur (B0") non nulles,

et inversement pour un passage de la deuxième hauteur à la première hauteur.

**14.** Capteur inertiel à atomes ultrafroids (30) permettant une mesure de vitesse de rotation selon trois axes X, Y' et Z comprenant :

- une puce atomique (ACh) selon l'une des revendications 6 à 9 placée dans une enceinte à vide,
- une source d'atomes agencée pour générer un nuage (12) d'atomes ultrafroids près dudit plan XY de ladite puce atomique, lesdits atomes ultrafoids présentant à l'état initialisé une superposition d'états internes la> et |b>,
- un générateur (GB) d'un champ magnétique homogène (B0),
- au moins un processeur, au moins un générateur de tension ou de courant continu adapté à commander des courants électriques dans lesdits fils conducteurs et au moins un générateur de tension ou de courant micro-ondes connecté audits guides d'ondes,
- lesdits guides d'ondes et lesdits fils conducteurs étant configurés pour :

- modifier l'énergie desdits atomes ultrafroids de manière à créer un minima de potentiel pour les atomes ultrafroids dans l'état interne la> et un minima de potentiel pour les atomes ultrafroids dans l'état interne |b>, formant ainsi un premier (T1) et deuxième (T2) pièges à atomes ultrafroids, un piège permettant d'immobiliser un nuage d'atomes ultrafroids (12) dans un état interne différent de l'autre piège, à une distance maîtrisée dudit plan de mesure, et
- séparer spatialement les deux pièges et déplacer lesdits pièges (T1, T2) suivant une première (TX) trajectoire fermée comprise dans un plan perpendiculaire à X et initialisée à partir d'un premier point de croisement d'initialisation (Cx) situé sur l'axe X, une deuxième trajectoire fermée (TY') comprise dans un plan perpendiculaire à Y' et initialisée à partir d'un deuxième point de croisement d'initialisation (Cy) situé sur l'axe Y', et une troisième trajectoire fermée (TZ) comprise dans un plan perpendiculaire à Z et initialisée à partir d'un troisième point de croisement d'initialisation (Cz) situé au point O, chaque trajectoire étant parcourue dans un sens par les atomes ultrafroids du premier piège et dans le sens opposé par les atomes ultrafroids du deuxième piège,

- le capteur comprenant en outre un système de détection d'intensité optique adapté à mesurer au moins une population de dits atomes ultrafroids dans un dit état interne.

15. Capteur trois axes selon la revendication 14 dans lequel lesdits guides d'ondes et l'au moins un générateur de tension ou de courant micro-ondes, lesdits fils conducteurs et l'au moins un générateur de tension ou de courant continu, et le générateur du champ magnétique homogène, sont configurés pour que les première et deuxième trajectoires fermées (TX, TY') comprennent chacune au moins une première portion localisée à une première hauteur (h1) du plan XY et une deuxième portion localisée à une deuxième hauteur (h2) strictement supérieure à la première hauteur, et pour opérer un passage de la première hauteur à la deuxième hauteur par :

- une augmentation d'une valeur du courant continu traversant chaque fil conducteur définissant le point de croisement d'initialisation associé, entre une première valeur ($I_{W1i}'$, $I_{W2j}'$) et une deuxième valeur ($I_{W1i}''$, $I_{W2j}''$) non nulles, et/ou
- une diminution d'une valeur du champ magnétique homogène entre une première valeur (B0') et une deuxième valeur (B0") non nulles,

et inversement pour un passage de la deuxième hauteur à la première hauteur.

16. Capteur (40) inertiel à atomes ultrafroids comprenant :

- une puce atomique matricielle selon l'une des revendications 9 à 11,
- une source d'atomes (S) agencée pour générer un nuage (12) d'atomes ultrafroids près dudit plan XY de ladite puce atomique,
- un générateur (GB) d'un champ magnétique homogène (B0),

- au moins un processeur (UT), au moins un générateur de tension ou de courant continu (GDC) adapté à commander des courants électriques dans lesdits fils conducteurs et au moins un générateur de tension ou de courant micro-ondes (GMW) connecté audits guides d'ondes,
- un système de détection d'intensité optique (SDET),

le capteur étant adapté pour mesurer, selon les besoins et de manière reconfigurable, au moins une accélération (ax, ay) et/ou une vitesse de rotation ($\Omega x$, $\Omega y$) selon au moins une direction correspondant à celle des axes Xn et/ou des axes Ym, à partir desdites puces élémentaires.

17. Procédé de mesure d'une vitesse de rotation autour de deux axes X et Y' par un capteur inertiel à atomes ultrafroids comprenant une puce atomique, ladite puce atomique étant placée dans une enceinte à vide et comportant un plan XY normal à un axe Z, la puce atomique comprenant :

- un premier et un deuxième guide d'ondes (CPWX1, CPWX2) coplanaires adaptés à la propagation d'ondes hyperfréquences à des pulsations respective $\omega_a$ et $\omega_b$, disposés symétriquement de part et d'autre de l'axe X, dénommés guides selon X,
- un premier et un deuxième guide d'ondes (CPWY'1, CPWY'2) coplanaires adaptés à la propagation d'ondes hyperfréquences à des pulsations respective $\omega'_a$ et $\omega'_b$, disposés symétriquement de part et d'autre d'un axe dont la projection dans le plan XY est selon un axe Y' différent de l'axe X et compris dans le plan XY, dénommés guides selon Y',
les guides selon X étant isolés électriquement des guides selon Y', une intersection desdits guides formant un parallélogramme de centre O définissant une origine du repère XYZ,
- au moins un premier fil conducteur W1 et un deuxième fil conducteur W2 dont les projections respectives dans le plan XY sont sécantes au point O et forment entre elles un angle supérieur ou égal à 20°, lesdits fils conducteurs étant adaptés à être traversés par des courants continus,
le procédé comprenant, pour la mesure de la vitesse de rotation selon un des axes X ou Y' dénommé axe de mesure, les étapes consistant à :

A Générer un nuage de dits atomes ultrafroids (12), incluant des phases d'émission desdits atomes, de refroidissement desdits atomes, d'initialisation desdits atomes dans au moins un état interne |a> et de piégeage d'un nuage de dits atomes ultrafroids dans un minimum local de potentiel, à une première hauteur (h1) dudit plan XY, ledit piégeage s'effectuant par passage de courants continus dans le premier et le deuxième fil conducteurs,

**B** Initialiser les états internes en superposant de manière cohérente lesdits atomes ultrafroids entre lesdits états la> et |b> par une première impulsion $\pi / 2$ ;

**C** Séparer spatialement un nuage de dits atomes de dit état interne |a> dans un piège (T1) d'un nuage de dits atomes de dit état interne |b> dans un autre piège (T2), et déplacer lesdits pièges en sens opposé suivant une trajectoire fermée contenue dans un plan perpendiculaire à l'axe de mesure et initialisée à partir du point O, en appliquant une tension ou un courant à fréquences micro-ondes prédéterminées auxdits premier et deuxième guides selon l'axe de mesure, en appliquant au moins deux valeurs différentes de tension ou de courant continu aux premier et deuxième fils conducteurs et/ou en appliquant au moins deux valeurs différentes d'un champ magnétique homogène, selon une séquence prédéterminée, ladite trajectoire comprenant une portion localisée à une deuxième hauteur (h2) du plan XY différente de la première hauteur (h1),

**D** Recombiner lesdits états internes la> et |b> en appliquant auxdits atomes ultrafroids une deuxième impulsion $\pi / 2$ puis mesurer la densité d'atomes dans un état interne choisi parmi au moins |a> et |b> ;

**E** Déterminer la phase Sagnac desdits atomes ultrafroids et calculer la vitesse de rotation dudit capteur selon ledit axe de mesure,

le procédé comprenant en outre une mise en œuvre des étapes A à E pour mesurer la vitesse de rotation selon l'autre axe de mesure.

**18.** Procédé de mesure d'une vitesse de rotation autour de trois axes X, Y' et Z par un capteur inertiel à atomes froid comprenant une puce atomique, ladite puce atomique étant placée dans une enceinte à vide et comportant un plan XY normal à un axe Z, des axes XYZ formant un repère orthonormé, la puce atomique comprenant :

- un premier et un deuxième guide d'ondes (CPWX1, CPWX2) coplanaires adaptés à la propagation d'ondes hyperfréquences à des pulsations respective $\omega_a$ et $\omega_b$, disposés symétriquement de part et d'autre de l'axe X, dénommés guides selon X,

- un premier et un deuxième guide d'ondes (CPWY1, CPWY2) coplanaires adaptés à la propagation d'ondes hyperfréquences à des pulsations respective $\omega'_a$ et $\omega'_b$, disposés symétriquement de part et d'autre d'un axe dont la projection dans le plan XY est selon un axe Y' différent de l'axe X et compris dans le plan XY, dénommés guides selon Y',

les guides selon X étant isolés électriquement des guides selon Y', une intersection desdits guides formant un parallélogramme de centre O définissant une origine du repère XYZ,

- une première pluralité de fils conducteurs (W1P) parallèles entre eux et une deuxième pluralité de fils conducteurs (W2P) parallèles entre eux, une projection dans le plan XY d'un fil de la première pluralité et d'un fil de la deuxième pluralité de fils conducteurs définissant un point de croisement,

une projection dans le plan XY desdites pluralités formant entre elles un angle supérieur ou égal à 20°, une projection dans le plan XY d'un fil de la première pluralité et d'un fil de la deuxième pluralité de fils conducteurs étant sécants au point O, lesdites premières et deuxième pluralité de fils conducteurs étant agencées de sorte qu'au moins une partie des points de croisement est à l'intérieur dudit parallélogramme,

le procédé comprenant :

- la mise en œuvre des étapes A à E du procédé selon la revendication 17 pour la mesure des vitesses de rotation selon X, la première (TX) trajectoire fermée, comprise dans un plan perpendiculaire à X, étant initialisée à partir d'un premier point de croisement d'initialisation (Cx) situé sur l'axe X,

- la mise en œuvre des étapes A à E du procédé selon la revendication 17 pour la mesure des vitesses de rotation selon Y', la deuxième (TY') trajectoire fermée comprise dans un plan perpendiculaire à Y' étant initialisée à partir d'un deuxième point de croisement d'initialisation (Cy) situé sur l'axe Y',

- pour la mesure de la vitesse de rotation selon l'axe Z, correspondant à l'axe de mesure :

- la mise en œuvre des étapes A et B du procédé selon la revendication 17,

- une étape **C'** consistant à séparer spatialement un nuage de dits atomes de dit état interne la> dans un piège (T1) et d'un nuage de dits atomes de dit état interne |b> dans un autre piège (T2), et déplacer lesdits pièges en sens opposé suivant une trajectoire fermée contenue dans un plan perpendiculaire à l'axe Z et initialisée à partir d'un troisième point de croisement d'initialisation (Cz), en appliquant une tension ou un courant à fréquences micro-ondes prédéterminées auxdits premier et deuxième guides selon l'un des axes X ou Y' dénommé axe choisi, et en appliquant une tension ou un courant continu aux fils conducteurs de la première et de la deuxième pluralité de fils conducteurs selon une séquence prédéterminée, de manière à exciter successivement des points de croisement disposés sur ou au voisinage de l'axe choisi,
- la mise en œuvre des étapes D et E selon la revendication 17.

**Patentansprüche**

1. Atomchip (Ach) für einen Gravitationssensor mit ultrakalten Atomen, eine XY-Ebene enthaltend, die zu einer Z-Achse senkrecht ist, wobei der Atomchip Folgendes umfasst:

   - einen ersten und einen zweiten Wellenleiter (CPWX1, CPWX2), die koplanar sind, die zum Verbreiten von Mikrowellen mit jeweiligen Winkelfrequenzen $\omega_a$ und $\omega_b$ geeignet sind, die symmetrisch auf beiden Seiten der X-Achse angeordnet sind, die als Leiter entlang X bezeichnet werden,
   - einen ersten und einen zweiten Wellenleiter (CPWY'1, CPWY'2), die koplanar sind, die zum Verbreiten von Mikrowellen mit jeweiligen Winkelfrequenzen $\omega'_a$ und $\omega'_b$ geeignet sind, die symmetrisch auf beiden Seiten einer Achse angeordnet sind, deren Projektion in der XY-Ebene entlang einer Y'-Achse liegt, die von der X-Achse verschieden ist und in der XY-Ebene enthalten ist, die als Leiter entlang Y' bezeichnet werden,
   wobei die Leiter entlang X elektrisch von den Leitern entlang Y' isoliert sind, wobei ein Schnittpunkt der Leiter ein Parallelogramm mit Zentrum O bildet, das einen Ursprung des Bezugssystems XYZ definiert,
   - mindestens einen ersten Leitungsdraht (W1) und einen zweiten Leitungsdraht (W2), deren jeweiligen Projektionen sich in der XY-Ebene in O schneiden und zwischen sich einen Winkel größer als oder gleich 20° bilden, wobei die Leitungsdrähte dazu geeignet sind, von Gleichströmen durchflossen zu werden.

2. Atomchip nach dem vorhergehenden Anspruch, wobei die Leiter entlang X, die Leiter entlang Y, der erste Leitungsdraht und der zweite Leitungsdraht jeweils in einer verschiedenen Ebene angeordnet sind, wobei jede Ebene von benachbarten Ebenen elektrisch isoliert ist, wobei die Ebenen einen Stapel (Emp) bilden, der auf einem Substrat (Sub) angeordnet ist.

3. Atomchip nach einem der vorhergehenden Ansprüche, wobei die Projektion in der XY-Ebene des ersten Leitungsdrahts (W1) entlang der X-Achse ausgerichtet ist und die Projektion in der XY-Ebene des zweiten Leitungsdrahts (W2) entlang der Y'-Achse ausgerichtet ist.

4. Atomchip nach einem der vorhergehenden Ansprüche, wobei die Y'-Achse mit der Y-Achse zusammenfällt.

5. Atomchip nach einem der Ansprüche 1 oder 2, wobei die Y'-Achse mit der Y-Achse zusammenfällt, wobei die jeweiligen Projektionen des ersten Leitungsdrahts und des zweiten Leitungsdrahts in der XY-Ebene zueinander senkrecht stehen und jeweils mit 45° zur X- und Y-Achse ausgerichtet sind.

6. Atomchip nach einem der vorhergehenden Ansprüche, ferner umfassend eine Vielzahl von Leitungsdrähten, die parallel zum ersten Leitungsdraht angeordnet sind, wobei sie eine erste Vielzahl von Leitungsdrähten (W1P) und eine Vielzahl von Leitungsdrähten bilden, die parallel zum zweiten Leitungsdraht angeordnet sind, wobei sie eine zweite Vielzahl von Leitungsdrähten (W2P) bilden, wobei eine Projektion in der XY-Ebene eines Drahts der ersten Vielzahl und eines Drahts der zweiten Vielzahl einen Kreuzungspunkt in der XY-Ebene definiert,
   wobei die erste und die zweite Vielzahl von Leitungsdrähten derart eingerichtet sind, dass mindestens ein Teil der Kreuzungspunkte im Inneren des Parallelogramms liegt.

7. Atomchip nach dem vorhergehenden Anspruch, wobei die erste Vielzahl und die zweite Vielzahl von Leitungsdrähten dafür konfiguriert sind, dass sich ein Unterteil des Teils der Kreuzungspunkte auf der X-Achse befindet und sich ein anderer Unterteil des Teils der Kreuzungspunkte auf der Y'-Achse befindet.

8. Atomchip nach einem der Ansprüche 6 oder 7, wobei die Leitungsdrähte eine Breite (l) aufweisen und wobei ein Abstand (d) zwischen zwei benachbarten Leitungsdrähten zwischen dem 0,5-fachen und 2-fachen der Breite liegt.

9. Atomchip nach einem der Ansprüche 1 oder 2, umfassend einen ersten Satz von ersten Leitungsdrähten (W1n) mit dem Index n und einen zweiten Satz von zweiten Leitungsdrähten (W2m) mit dem Index m, die zueinander senkrecht stehen und jeweils Zeilen und Spalten einer Matrix (AchM) bilden, wobei jeder der ersten Leitungsdrähte mit dem Index n und der zweiten Leitungsdrähte mit dem Index m jeweils mit einer Xn-Achse mit dem Index n und einer Ym-Achse mit dem Index m zusammenfällt, wobei die Leiter (CPWX1n, CPWX2n) entlang der Xn-Achse somit allen Pixeln der Zeile n gemeinsam sind und die Leiter (CPWY1m, CPWY2m) entlang der Ym-Achse somit allen Pixeln der Spalte m gemeinsam sind, wobei jedes Pixel der Matrix einen Elementarchip (Ach(n,m)) bildet.

10. Atomchip nach einem der Ansprüche 1 oder 2, umfassend einen ersten Satz von ersten Leitungsdrähten (W1n) mit dem Index n und einen zweiten Satz von zweiten Leitungsdrähten (W2m) mit dem Index m, die zueinander senkrecht stehen und jeweils Zeilen und Spalten einer Matrix (AchM') bilden, wobei jeder der ersten Leitungsdrähte mit dem Index n und der zweiten Leitungsdrähte mit dem Index m jeweils mit 45° einer Xk-Achse mit dem Index k und mit 45° einer Yl-Achse mit dem Index m ausgerichtet sind, wobei die Leiter (CPWX1k, CPWX2k) entlang der Xk-Achse somit allen Pixeln einer ersten Diagonale der Matrix gemeinsam sind und die Leiter (CPWY1l, CPWY2l) entlang der Yl-Achse somit allen Pixeln einer zweiten Diagonale gemeinsam sind, wobei jedes Pixel der Matrix einen Elementarchip (Ach(n, m)) bildet.

11. Matrix-Atomchip nach einem der Ansprüche 9 oder 10, wobei mindestens ein Leitungsdraht des ersten oder des zweiten Satzes durch eine Vielzahl von zueinander parallelen Leitungsdrähten ersetzt ist, wobei ein Abschnitt der Leitungsdrähte der Vielzahl in den zugeordneten Parallelogrammen enthalten ist.

12. Gravitationssensor mit ultrakalten Atomen (20), der eine Rotationsgeschwindigkeitsmessung entlang mindestens zwei Achsen X und Y' ermöglicht, umfassend:

- einen Atomchip (ACh) nach einem der Ansprüche 1 bis 5, der in einer Vakuumhülle platziert ist,
- eine Atomquelle (S), die eingerichtet ist, um eine Wolke (12) aus ultrakalten Atomen in der Nähe der XY-Ebene des Atomchips zu erzeugen, wobei die ultrakalten Atome während der Initialisierungsphase der Implementierung des Sensors eine Überlagerung von internen Zuständen |a> und |b> aufweisen,
- einen Generator (GB) für ein homogenes Magnetfeld (B0),
- mindestens einen Prozessor (UT), mindestens einen Spannungsgenerator oder Gleichstromgenerator (GDC), der dazu geeignet ist, elektrische Ströme in den Leitungsdrähten zu steuern, und mindestens einen Mikrowellenspannungs- oder -stromgenerator (GMW), der mit den Wellenleitern verbunden ist,
- wobei die Wellenleiter, die Leitungsdrähte und gegebenenfalls das Magnetfeld bei Implementierung des Sensors dafür konfiguriert sind,
- die Energie der ultrakalten Atome derart zu modifizieren, dass ein Potentialminimum für die ultrakalten Atome im internen Zustand |a> und ein Potentialminimum für die ultrakalten Atome im internen Zustand |b> geschaffen wird, wodurch eine erste (T1) und eine zweite (T2) Falle für ultrakalte Atome gebildet werden, wobei es eine Falle ermöglicht, eine Wolke von ultrakalten Atomen (12) in einem internen Zustand, der von der anderen Falle verschieden ist, in einem kontrollierten Abstand von der Messebene zu immobilisieren, und
- die beiden Fallen räumlich zu trennen und die Fallen (T1, T2), folgend mindestens einer ersten geschlossenen Trajektorie (TX), die in einer Ebene senkrecht zu X enthalten ist, und einer zweiten geschlossenen Trajektorie (TY'), die in einer Ebene senkrecht zu Y' enthalten ist, zu verschieben, wobei jede Trajektorie in einer Richtung von den ultrakalten Atomen der ersten Falle und in der entgegengesetzten Richtung von den ultrakalten Atomen der zweiten Falle durchflossen wird,
- wobei der Sensor ferner ein System zum Erkennen der optischen Intensität (SDET) umfasst, das dazu geeignet ist, mindestens eine Population der ultrakalten Atome in einem als intern bezeichneten Zustand zu messen.

13. Zweiachsensensor nach Anspruch 12, wobei die Wellenleiter und der mindestens eine Mikrowellenspannungs- oder -stromgenerator, die Leitungsdrähte und der mindestens eine Spannungs- oder Gleichstromgenerator und der Generator für das homogene Magnetfeld dafür konfiguriert sind, dass die erste (TX) und die zweite (TY') geschlossene Trajektorie jeweils mindestens einen ersten, sich auf einer ersten Höhe (h1) der XY-Ebene befindlichen Abschnitt und einen zweiten, sich auf einer zweiten Höhe (h2), die deutlich höher als die erste Höhe ist, befindlichen Abschnitt umfasst, und zum Betreiben eines Übergangs von der ersten Höhe zur zweiten Höhe durch:

- eine Erhöhung des Wertes des Gleichstroms, der jeden Leitungsdraht durchfließt, zwischen einem ersten Wert ($I_{W1}'$, $I_{W2}'$) und einem zweiten Wert ($I_{W1}''$, $I_{W2}''$) ungleich null und/oder
- eine Verringerung eines Wertes des homogenen Magnetfelds zwischen einem ersten Wert (B0') und einem zweiten Wert (B0'') ungleich null,

und umgekehrt für einen Übergang von der zweiten Höhe zur ersten Höhe.

14. Gravitationssensor mit ultrakalten Atomen (30), der eine Rotationsgeschwindigkeitsmessung entlang drei Achsen, X, Y' und Z ermöglicht, umfassend:

  - einen Atomchip (ACh) nach einem der Ansprüche 6 bis 9, der in einer Vakuumhülle platziert ist,
  - eine Atomquelle, die dazu eingerichtet ist, eine Wolke (12) von ultrakalten Atomen in der Nähe der XY-Ebene des Atomchips zu erzeugen, wobei die ultrakalten Atome im initialisierten Zustand eine Überlagerung von internen Zuständen |a> und |b> aufweisen,
  - einen Generator (GB) für ein homogenes Magnetfeld (B0),
  - mindestens einen Prozessor, mindestens einen Spannungs- oder Gleichstromgenerator, der dazu geeignet ist, elektrische Ströme in den Leitungsdrähten zu steuern, und mindestens einen Mikrowellenspannungs- oder -stromgenerator, der mit den Wellenleitern verbunden ist,
  - wobei die Wellenleiter und die Leitungsdrähte konfiguriert sind, um:
  - die Energie der ultrakalten Atome derart zu modifizieren, dass ein Potentialminimum für die ultrakalten Atome im internen Zustand |a> und ein Potentialminimum für die ultrakalten Atome im internen Zustand |b> geschaffen wird, wodurch eine erste (T1) und eine zweite (T2) Falle für ultrakalte Atome gebildet werden, wobei es eine Falle ermöglicht, eine Wolke von ultrakalten Atomen (12) in einem internen Zustand, der von der anderen Falle verschieden ist, in einem kontrollierten Abstand von der Messebene zu immobilisieren, und
  - räumlich die beiden Fallen zu trennen und die Fallen (T1, T2) einer ersten geschlossenen Trajektorie (TX) folgend, die in einer Ebene senkrecht zu X enthalten ist und anhand eines ersten Initialisierungskreuzungspunktes (Cx), der sich auf der X-Achse befindet, initialisiert wird, einer zweiten geschlossenen Trajektorie (TY') folgend, die in einer Ebene senkrecht zu Y' enthalten ist und anhand eines zweiten Initialisierungskreuzungspunktes (Cy), der sich auf der Y'-Achse befindet, initialisiert wird, und einer dritten geschlossenen Trajektorie (TZ) folgend, die in einer Ebene senkrecht zu Z enthalten ist und anhand eines dritten Initialisierungskreuzungspunktes (Cz), der sich am Punkt O befindet, initialisiert wird, zu verschieben, wobei jede Trajektorie in einer Richtung von den ultrakalten Atomen der ersten Falle und in der entgegengesetzten Richtung von den ultrakalten Atomen der zweiten Falle durchflossen wird,
  - wobei der Sensor ferner ein System zum Erkennen der optischen Intensität umfasst, das dazu geeignet ist, mindestens eine Population von ultrakalten Atomen in einem als intern bezeichneten Zustand zu messen.

15. Dreiachsensensor nach Anspruch 14, wobei die Wellenleiter und der mindestens eine Mikrowellenspannungs- oder -stromgenerator, die Leitungsdrähte und der mindestens eine Spannungs- oder Gleichstromgenerator und der Generator für das homogene Magnetfeld dafür konfiguriert sind, dass die erste und die zweite geschlossene Trajektorie (TX, TY') jeweils mindestens einen ersten, sich auf einer ersten Höhe (h1) der XY-Ebene befindlichen Abschnitt und einen zweiten, sich auf einer zweiten Höhe (h2) befindlichen Abschnitt, die deutlich höher als die erste Höhe ist, umfassen, und zum Betreiben eines Übergangs von der ersten Höhe zur zweiten Höhe durch:

  - eine Erhöhung eines Wertes des Gleichstroms, der jeden Leitungsdraht durchfließt, der den zugeordneten Initialisierungskreuzungspunkt definiert, zwischen einem ersten Wert ($I_{W1i}'$, $I_{W2j}'$) und einem zweiten Wert ($I_{W1i}''$ $I_{W2j}''$) ungleich null, und/oder
  - eine Verringerung eines Wertes des homogenen Magnetfelds zwischen einem ersten Wert (B0') und einem zweiten Wert (B0'') ungleich null,

und umgekehrt für einen Übergang von der zweiten Höhe zur ersten Höhe.

16. Gravitationssensor (40) mit ultrakalten Atomen, umfassend:

  - einen Matrix-Atomchip nach einem der Ansprüche 9 bis 11,
  - eine Atomquelle (S), die eingerichtet ist, um eine Wolke (12) aus ultrakalten Atomen in der Nähe der XY-Ebene des Atomchips zu erzeugen,
  - einen Generator (GB) für ein homogenes Magnetfeld (B0),
  - mindestens einen Prozessor (UT), mindestens einen Spannungs- oder Gleichstromgenerator (GDC), der dazu geeignet ist, elektrische Ströme in den Leitungsdrähten zu steuern, und mindestens einen Mikrowellenspannungs- oder -stromgenerator (GMW), der mit den Wellenleitern verbunden ist,
  - ein System zum Erkennen der optischen Intensität (SDET),

wobei der Sensor dafür geeignet ist, gemäß dem Bedarf und rekonfigurierbar mindestens eine Beschleunigung (ax, ay) und/oder eine Rotationsgeschwindigkeit ($\Omega$x, $\Omega$y) entlang mindestens einer Richtung entsprechend derjenigen der Xn-Achsen und/oder der Ym-Achsen ausgehend von den Elementarchips zu messen.

17. Verfahren zum Messen einer Rotationsgeschwindigkeit um zwei Achsen X und Y' durch einen Gravitationssensor mit ultrakalten Atomen, umfassend einen Atomchip, wobei der Atomchip in einer Vakuumhülle platziert wird und eine XY-Ebene aufweist, die zu einer Z-Achse normal ist, wobei der Atomchip umfasst:

- einen ersten und einen zweiten Wellenleiter (CPWX1, CPWX2), die koplanar sind, die zum Verbreiten von Mikrowellen mit jeweiligen Winkelfrequenzen $\omega_a$ und $\omega_b$ geeignet sind, die symmetrisch auf beiden Seiten der X-Achse angeordnet sind, die als Leiter entlang X bezeichnet werden,
- einen ersten und einen zweiten Wellenleiter (CPWY'1, CPWY'2), die koplanar sind, die zum Verbreiten von Mikrowellen mit jeweiligen Winkelfrequenzen $\omega'_a$ und $\omega'_b$ geeignet sind, die symmetrisch auf beiden Seiten einer Achse angeordnet sind, deren Projektion in der XY-Ebene entlang einer Y'-Achse liegt, die von der X-Achse verschieden ist und in der XY-Ebene enthalten ist, die als Leiter entlang Y' bezeichnet werden,
wobei die Leiter entlang X elektrisch von den Leitern entlang Y' isoliert sind, wobei ein Schnittpunkt der Leiter ein Parallelogramm mit Zentrum O bildet, das einen Ursprung des Bezugssystems XYZ definiert,
- mindestens einen ersten Leitungsdraht W1 und einen zweiten Leitungsdraht W2, deren jeweiligen Projektionen in der XY-Ebene sich am Punkt O schneiden und zwischen sich einen Winkel größer als oder gleich 20° bilden, wobei die Leitungsdrähte dazu geeignet sind, von Gleichströmen durchflossen zu werden,
wobei das Verfahren zum Messen der Rotationsgeschwindigkeit entlang einer der X- oder Y'-Achse, die als Messachse bezeichnet wird, Folgendes umfasst:

A Erzeugen einer Wolke der ultrakalten Atome (12), einschließend Phasen der Emission der Atome, der Kühlung der Atome, der Initialisierung der Atome in mindestens einem internen Zustand |a> und des Einfangens einer Wolke der ultrakalten Atome in einem lokalen Potentialminium auf einer ersten Höhe (h1) der XY-Ebene, wobei das Einfangen durch Hindurchfließen von Gleichströmen in dem ersten und dem zweiten Leitungsdraht erfolgt,
B Initialisieren der internen Zustände durch kohärentes Überlagern der ultrakalten Atome zwischen den Zuständen |a> und |b> durch einen ersten Impuls $\pi / 2$;
C räumliches Trennen einer Wolke der Atome eines als intern bezeichneten Zustands |a> in einer Falle (T1) von einer Wolke der Atome eines als intern bezeichneten Zustands |b> in einer anderen Falle (T2) und Verschieben der Fallen in entgegengesetzter Richtung folgend einer geschlossenen Trajektorie, die in einer Ebene senkrecht zur Messachse enthalten ist und ausgehend vom Punkt O initialisiert wird, durch Anlegen einer Spannung oder eines Stroms mit vorbestimmten Mikrowellenfrequenzen an den ersten und den zweiten Leiter entlang der Messachse, durch Anlegen von mindestens zwei verschiedenen Spannungs- oder Gleichstromwerten an den ersten und den zweiten Leitungsdraht und/oder durch Anlegen von mindestens zwei verschiedenen Werten eines homogenen Magnetfelds gemäß einer vorbestimmten Sequenz, wobei die Trajektorie einen lokalisierten Abschnitt in einer zweiten Höhe (h2) der XY-Ebene umfasst, die von der ersten Höhe (h1) verschieden ist,
D Rekombinieren der internen Zustände |a> und |b> durch Anlegen eines zweiten Impulses $\pi / 2$ an die ultrakalten Atome, dann Messen der Atomdichte in einem internen Zustand, ausgewählt mindestens aus |a> und |b>;
E Bestimmen der Sagnac-Phase der ultrakalten Atome und Berechnen der Rotationsgeschwindigkeit des Sensors entlang der Messachse,

wobei das Verfahren ferner eine Implementierung der Schritte A bis E zum Messen der Rotationsgeschwindigkeit entlang der anderen Messachse umfasst.

18. Verfahren zum Messen einer Rotationsgeschwindigkeit um drei Achsen X, Y' und Z durch einen Gravitationssensor mit kalten Atomen, umfassend einen Atomchip, wobei der Atomchip in einer Vakuumhülle platziert wird und eine XY-Ebene aufweist, die zu einer Z-Achse normal ist, wobei XYZ-Achsen ein orthonormiertes Bezugssystem bilden, wobei der Atomchip Folgendes umfasst:

- einen ersten und einen zweiten Wellenleiter (CPWX1, CPWX2), die koplanar sind, die zum Verbreiten von Mikrowellen mit jeweiligen Winkelfrequenzen $\omega_a$ und $\omega_b$ geeignet sind, die symmetrisch auf beiden Seiten der X-Achse angeordnet sind, die als Leiter entlang X bezeichnet werden,

- einen ersten und einen zweiten Wellenleiter (CPWY1, CPWY2), die koplanar sind, die zum Verbreiten von Mikrowellen mit jeweiligen Winkelfrequenzen $\omega'_a$ und $\omega'_b$ geeignet sind, die symmetrisch auf beiden Seiten einer Achse angeordnet sind, deren Projektion in der XY-Ebene entlang einer Y'-Achse liegt, die von der X-Achse verschieden ist und in der XY-Ebene enthalten ist, die als Leiter entlang Y' bezeichnet werden,

wobei die Leiter entlang X elektrisch von den Leitern entlang Y' isoliert sind, wobei ein Schnittpunkt der Leiter ein Parallelogramm mit Zentrum O bildet, das einen Ursprung des Bezugssystems XYZ definiert,

- eine erste Vielzahl von Leitungsdrähten (W1P), die zueinander parallel sind, und eine zweite Vielzahl von Leitungsdrähten (W2P), die zueinander parallel sind, wobei eine Projektion in der XY-Ebene eines Drahts der ersten Vielzahl und eines Drahts der zweiten Vielzahl von Leitungsdrähten einen Kreuzungspunkt definiert,

wobei eine Projektion in der XY-Ebene der Vielzahlen zwischen sich einen Winkel größer als oder gleich 20° bildet, wobei eine Projektion in der XY-Ebene eines Drahts der ersten Vielzahl und eines Drahts der zweiten Vielzahl von Leitungsdrähten sich am Punkt O schneiden, wobei die erste und die zweite Vielzahl von Leitungsdrähten derart eingerichtet sind, dass mindestens ein Teil der Kreuzungspunkte im Inneren des Parallelogramms liegt, wobei das Verfahren Folgendes umfasst:

- Implementieren der Schritte A bis E des Verfahrens nach Anspruch 17 zum Messen der Rotationsgeschwindigkeiten entlang X, wobei die erste (TX) geschlossene Trajektorie, die in einer Ebene senkrecht zu X enthalten ist, ausgehend von einem ersten Initialisierungskreuzungspunkt (Cx), der sich auf der X-Achse befindet, initialisiert wird,

- Implementieren der Schritte A bis E des Verfahrens nach Anspruch 17 zum Messen der Rotationsgeschwindigkeiten entlang Y', wobei die zweite (TY') geschlossene Trajektorie, die in einer Ebene senkrecht zu Y' enthalten ist, ausgehend von einem zweiten Initialisierungskreuzungspunkt (Cy), der sich auf der Y'-Achse befindet, initialisiert wird,

- für die Messung der Rotationsgeschwindigkeit entlang der Z-Achse entsprechend der Messachse:

- Implementieren der Schritte A und B des Verfahrens nach Anspruch 17,

- einen Schritt C', der darin besteht, eine Wolke der Atome eines als intern bezeichneten Zustands |a> in einer Falle (T1) und eine Wolke der Atome eines als intern bezeichneten Zustands |b> in einer anderen Falle (T2) räumlich zu trennen und die Fallen in entgegengesetzter Richtung folgend einer geschlossenen durchgehenden Trajektorie in einer Ebene senkrecht zur Z-Achse und initialisiert ausgehend von einem dritten Initialisierungskreuzungspunkt (Cz) zu verschieben, durch Anlegen einer Spannung oder eines Stroms mit vorbestimmten Mikrowellenfrequenzen an den ersten und den zweiten Leiter entlang einer der X- oder Y'-Achse, die als gewählte Achse bezeichnet wird, und durch Anlegen einer Spannung oder eines Gleichstroms an die Leitungsdrähte der ersten und der zweiten Vielzahl von Leitungsdrähten gemäß einer vorbestimmten Sequenz, um nacheinander Kreuzungspunkte zu erregen, die auf der gewählten Achse oder in deren Nähe angeordnet sind,

- Implementieren der Schritte D und E nach Anspruch 17.

## Claims

1. An atom chip (Ach) for an ultracold-atom inertial sensor, containing an XY-plane normal to a Z-axis, the atom chip comprising:

- a first and a second coplanar waveguide (CPWX1, CPWX2), both suitable for propagating microwaves at respective angular frequencies $\omega_a$ and $\omega_b$ and disposed symmetrically on either side of the X-axis and being referred to as X-wise guides,

- a first and a second coplanar waveguide (CPWY'1, CPWY'2), both suitable for propagating microwaves at respective angular frequencies $\omega'_a$ and $\omega'_b$ and disposed symmetrically on either side of an axis the projection of which in the XY-plane is along a Y'-axis that is different from the X-axis and that is contained in the XY-plane, and being referred to as Y'-wise guides, the X-wise guides being electrically insulated from the Y'-wise guides, an intersection of said guides forming a parallelogram of centre O defining an origin of the reference frame XYZ,
- at least a first conductive wire (W1) and a second conductive wire (W2) the respective projections of which in the XY-plane are secant at O and form an angle larger than or equal to 20° between them, said conductive wires being suitable for being passed through by DC currents.

2. The atom chip according to the preceding claim, wherein the X-wise guides, the Y-wise guides, the first conductive wire and the second conductive wire are each disposed on a different level, each level being electrically insulated from the neighbouring levels, said levels forming a stack (Emp) disposed on a substrate (Sub).

3. The atom chip according to one of the preceding claims, wherein the projection of the first conductive wire (W1) in the XY-plane is oriented along the X-axis and the projection of the second conductive wire (W2) in the XY-plane is oriented along the Y'-axis.

4. The atom chip according to one of the preceding claims, wherein the Y'-axis coincides with the Y-axis.

5. The atom chip according to one of claims 1 or 2, wherein the Y'-axis coincides with the Y-axis, wherein the respective projections of the first conductive wire and the second conductive wire in the XY-plane are mutually perpendicular and oriented at 45° from the X- and Y-axes, respectively.

6. The atom chip according to one of the preceding claims, further comprising a plurality of conductive wires disposed parallel to said first conductive wire, forming a first plurality of conductive wires (W1P), and a plurality of conductive wires disposed parallel to said second conductive wire, forming a second plurality of conductive wires (W2P), a projection in the XY-plane of a wire of the first plurality and of a wire of the second plurality defining a crossing point on the XY-plane,
said first and second pluralities of conductive wires being arranged so that at least a portion of the crossing points is inside said parallelogram.

7. The atom chip according to the preceding claim, wherein the first plurality and the second plurality of conductive wires are configured so that a sub-portion of said portion of the crossing points is located on the X-axis and another sub-portion of said portion of the crossing points is located on the Y'-axis.

8. The atom chip according to one of claims 6 or 7, wherein the conductive wires have a width (l) and wherein a distance (d) between two neighbouring conductive wires is between 0.5 times and 2 times said width.

9. The atom chip according to one of claims 1 or 2, comprising a first set of first conductive wires (W1n) indexed n and a second set of second conductive wires (W2m) indexed m that are mutually perpendicular and that form rows and columns of a matrix array, respectively (AchM),
each of the first conductive wires indexed n and the second conductive wires indexed m being coincident with an Xn-axis indexed n and an Ym-axis indexed m, respectively, the guides (CPWX1n, CPWX2n) along the Xn-axis thus being common to all the pixels of row n and the guides (CPWY1m, CPWY2m) along the Ym-axis thus being common to all the pixels of column m, each pixel of the matrix array forming an elementary chip (Ach(n,m)).

10. The atom chip according to one of claims 1 or 2, comprising a first set of first conductive wires (W1n) indexed n and a second set of second conductive wires (W2m) indexed m that are mutually perpendicular and that form rows and columns of a matrix array (AchM'), respectively,
each of the first conductive wires indexed n and the second conductive wires indexed m being oriented at 45° from an Xk-axis indexed k and at 45° from an Yl-axis indexed m, respectively, the guides (CPWX1k, CPWX2k) along the Xk-axis thus being common to all the pixels of a first diagonal of the matrix array and the guides (CPWY1l, CPWY2l) along the Yl-axis thus being common to all the pixels of a second diagonal, each pixel of the matrix array forming an elementary chip (Ach(n,m)).

11. The matrix-array atom chip according to one of claims 9 or 10, wherein at least one conductive wire of the first or the second set is replaced by a plurality of conductive wires that are mutually parallel, a portion of the conductive wires of said plurality being comprised in the associated parallelograms.

12. An ultracold-atom inertial sensor (20) for measuring a speed of rotation about at least two axes X and Y', comprising:

- an atom chip (ACh) according to one of claims 1 to 5 placed in a vacuum chamber,
- an atom source (S) arranged to generate a cloud (12) of ultracold atoms near said XY-plane of said atom chip,
said ultracold atoms having, during the phase of initialisation of the implementation of the sensor, a superposition of internal states |a> and |b>,
- a generator (GB) of a uniform magnetic field (B0),
- at least one processor (UT), at least one DC current or voltage generator (GDC) suitable for controlling electric currents in said conductive wires and at least one microwave current or voltage generator (GMW) connected to said waveguides,

- said waveguides, said conductive wires and, where appropriate, the magnetic field being configured, during the implementation of the sensor, to:
- modify the energy of said ultracold atoms so as to create a potential minimum for the ultracold atoms in the internal state |a> and a potential minimum for the ultracold atoms in the internal state |b>, thus forming a first ultracold-atom trap (T1) and a second ultracold-atom trap (T2), one trap making it possible to immobilise a cloud of ultracold atoms (12) in an internal state different from the other trap, at a controlled distance from said measurement plane, and
- spatially separate the two traps and move said traps (T1, T2) along at least a first closed path (TX) comprised in a plane perpendicular to X and a second closed path (TY') comprised in a plane perpendicular to Y', each path being travelled in one direction by the ultracold atoms of the first trap and in the opposite direction by the ultracold atoms of the second trap,
- the sensor further comprising a system for detecting optical intensity (SDET), suitable for measuring at least one population of said ultracold atoms in a said internal state.

13. The two-axes sensor according to claim 12 wherein said waveguides and the at least one microwave current or voltage generator, said conductive wires and the at least one DC current or voltage generator, and the generator of the uniform magnetic field are configured so that the first closed path (TX) and second closed path (TY') each comprise at least a first portion located at a first height (h1) from the XY-plane and a second portion located at a second height (h2) strictly larger than the first height, and so as to cause passage from the first height to the second height via:

- an increase in the value of the DC current passing through each conductive wire, between a first non-zero value ($I_{W1}$', $I_{W2}$') and a second non-zero value ($I_{W1}$", $I_{W2}$") and/or,
- a decrease in a value of the uniform magnetic field between a first non-zero value (B0') and a second non-zero value (B0"),

and vice versa for passage from the second height to the first height.

14. An ultracold-atom inertial sensor (30) for measuring a speed of rotation about three axes X, Y' and Z, comprising:

- an atom chip (ACh) according to one of claims 6 to 9 placed in a vacuum chamber,
- an atom source arranged to generate a cloud (12) of ultracold atoms near said XY-plane of said atom chip, said ultracold atoms having a superposition of internal states |a> and |b> in the initialised state,
- a generator (GB) of a uniform magnetic field (B0),
- at least one processor, at least one DC current or voltage generator suitable for controlling electric currents in said conductive wires and at least one microwave current or voltage generator connected to said waveguides,
- said waveguides and said conductive wires being configured to:
- modify the energy of said ultracold atoms so as to create a potential minimum for the ultracold atoms in the internal state |a> and a potential minimum for the ultracold atoms in the internal state |b>, thus forming a first ultracold-atom trap (T1) and a second ultracold-atom trap (T2), one trap making it possible to immobilise a cloud of ultracold atoms (12) in an internal state different from the other trap, at a controlled distance from said measurement plane, and
- spatially separate the two traps and move said traps (T1, T2) along a first closed path (TX) comprised in a plane perpendicular to X and initialised from a first initialisation crossing point (Cx) located on the X-axis, a second closed path (TY') comprised in a plane perpendicular to Y' and initialised from a second initialisation crossing point (Cy) located on the Y'-axis, and a third closed path (TZ) comprised in a plane perpendicular to Z and initialised from a third initialisation crossing point (Cz) located at point O, each path being travelled in one direction by the ultracold atoms of the first trap and in the opposite direction by the ultracold atoms of the second trap,
- the sensor further comprising a system for detecting optical intensity, suitable for measuring at least one population of said ultracold atoms in a said internal state.

15. The three-axes sensor according to claim 14 wherein said waveguides and the at least one microwave current or voltage generator, said conductive wires and the at least one DC current or voltage generator, and the generator of the uniform magnetic field are configured so that the first and second closed paths (TX, TY') each comprise at least a first portion located at a first height (h1) from the XY-plane and a second portion located at a second height (h2) strictly larger than the first height, and so as to cause passage from the first height to the second height via:

- an increase in a value of the DC current passing through each conductive wire defining the associated initialisation crossing point, between a first non-zero value ($I_{W1i}'$, $I_{W2j}'$) and a second non-zero value ($I_{W1i}''$, $I_{W2j}''$) and/or,
- a decrease in a value of the uniform magnetic field between a first non-zero value ($B0'$) and a second non-zero value ($B0''$),

and vice versa for passage from the second height to the first height.

16. An ultracold-atom inertial sensor (40), comprising:

- a matrix-array atom chip according to one of claims 9 to 11,
- an atom source (S) arranged to generate a cloud (12) of ultracold atoms near said XY-plane of said atom chip,
- a generator (GB) of a uniform magnetic field (B0),
- at least one processor (UT), at least one DC current or voltage generator (GDC) suitable for controlling electric currents in said conductive wires and at least one microwave current or voltage generator (GMW) connected to said waveguides,
- a system (SDET) for detecting optical intensity,

the sensor being suitable for measuring, as required and in a reconfigurable manner, at least one acceleration (ax, ay) and/or one speed of rotation ($\Omega x$, $\Omega y$) along/about at least one direction corresponding to that of the Xn-axes and/or the Ym-axes, using said elementary chips.

17. A method for measuring a speed of rotation about two axes X and Y' using an ultracold-atom inertial sensor comprising an atom chip, said atom chip being placed in a vacuum chamber and containing an XY-plane normal to a Z-axis, the atom chip comprising:

- a first and a second coplanar waveguide (CPWX1, CPWX2), both suitable for propagating microwaves at respective angular frequencies $\omega_a$ and $\omega_b$ and disposed symmetrically on either side of the X-axis and being referred to as X-wise guides,
- a first and a second coplanar waveguide (CPWY'1, CPWY'2), both suitable for propagating microwaves at respective angular frequencies $\omega'_a$ and $\omega'_b$ and disposed symmetrically on either side of an axis the projection of which in the XY-plane is along a Y'-axis that is different from the X-axis and that is contained in the XY-plane, and being referred to as Y'-wise guides, the X-wise guides being electrically insulated from the Y'-wise guides, an intersection of said guides forming a parallelogram of centre O defining an origin of the reference frame XYZ,
- at least a first conductive wire W1 and a second conductive wire W2 the respective projections of which in the XY-plane are secant at the point O and form an angle larger than or equal to 20° between them, said conductive wires being suitable for being passed through by DC currents, the method comprising, to measure the speed of rotation about one of the X- and Y'-axis, which is referred to as the measurement axis, the steps of:

A generating a cloud of said ultracold atoms (12), including phases of emitting said atoms, of cooling said atoms, of initialising said atoms in at least one internal state |a> and of trapping a cloud of said ultracold atoms in a local potential minimum, at a first height (h1) from said XY-plane, said trapping being carried out by passing DC currents through the first and second conductive wires,

B initialising the internal states by coherently superposing said ultracold atoms between said states |a> and |b> via a first pulse $\pi / 2$;

C spatially separating a cloud of said atoms of said internal state |a> in one trap (T1) from a cloud of said atoms of said internal state |b> in another trap (T2), and moving said traps in opposite directions along a closed path contained in a plane perpendicular to the measurement axis and initialised from point O, by applying a voltage or a current at predetermined microwave frequencies to said first and second guides along the measurement axis, by applying at least two different DC current or voltage values to the first and second conductive wires and/or by applying at least two different values of a uniform magnetic field, in a predetermined sequence, said path comprising a portion located at a second height (h2) of the XY-plane different from the first height (h1),

D recombining said internal states |a> and |b> by applying to said ultracold atoms a second pulse $\pi / 2$ then measuring the density of atoms in an internal state chosen from at least |a> and |b>;

E determining the Sagnac phase of said ultracold atoms and computing the speed of rotation of said sensor about said measurement axis,

the method further comprising implementing steps A to E to measure the speed of rotation about the other measurement axis.

18. A method for measuring a speed of rotation about three axes X, Y' and Z using a cold-atom inertial sensor comprising an atom chip, said atom chip being placed in a vacuum chamber and containing an XY-plane normal to a Z-axis, the axes XYZ forming an orthonormal reference frame, the atom chip comprising:

- a first and a second coplanar waveguide (CPWX1, CPWX2), both suitable for propagating microwaves at respective angular frequencies $\omega_a$ and $\omega_b$ and disposed symmetrically on either side of the X-axis and being referred to as X-wise guides,
- a first and a second coplanar waveguide (CPWY1, CPWY2), both suitable for propagating microwaves at respective angular frequencies $\omega'_a$ and $\omega'_b$ and disposed symmetrically on either side of an axis the projection of which in the XY-plane is along a Y'-axis that is different from the X-axis and that is comprised in the XY-plane, and being referred to as Y'-wise guides, the X-wise guides being electrically insulated from the Y'-wise guides, an intersection of said guides forming a parallelogram of centre O defining an origin of the reference frame XYZ,
- a first plurality of mutually parallel conductive wires (W1P) and a second plurality of mutually parallel conductive wires (W2P), a projection in the XY-plane of a wire of the first plurality and a wire of the second plurality of conductive wires defining a crossing point,
a projection in the XY-plane of said pluralities forming an angle larger than or equal to 20° between them, a projection in the XY-plane of a wire of the first plurality and a wire of the second plurality of conductive wires being secant at the point O, said first and second pluralities of conductive wires being arranged so that at least a portion of the crossing points is inside said parallelogram,
the method comprising:

- implementing steps A to E of the method according to claim 17 to measure speeds of rotation about X, the first closed path (TX), comprised in a plane perpendicular to X, being initialised from a first initialisation crossing point (Cx) located on the X-axis,
- implementing steps A to E of the method according to claim 17 to measure speeds of rotation about Y', the second closed path (TY'), comprised in a plane perpendicular to Y', being initialised from a second initialisation crossing point (Cy) located on the Y'-axis,
- to measure the speed of rotation about the Z-axis, corresponding to the measurement axis:
- implementing steps A and B of the method according to claim 17,
- a step C' consisting in spatially separating a cloud of said atoms of said internal state |a> in one trap (T1) from a cloud of said atoms of said internal state |b> in another trap (T2), and moving said traps in opposite directions along a closed path contained in a plane perpendicular to the Z-axis and initialised from a third initialisation crossing point (Cz), by applying a voltage or a current at predetermined microwave frequencies to said first and second guides along one of the X- or Y'- axis, which is referred to as the chosen axis, and by applying a DC current or voltage to the conductive wires of the first and the second plurality of conductive wires in a predetermined sequence, so as to successively excite crossing points disposed on or in the vicinity of the chosen axis,
- implementing steps D and E according to claim 17.

FIG.1

FIG.2

FIG.3

FIG.4

N (CPW/X)

N (CPW/Y')

Emp

N (W1)

N (W2)

Sub

FIG.5

FIG.6

FIG.7

FIG.8

FIG.9

FIG.10

FIG.11

FIG.12

FIG.13

FIG.14

FIG.15

EP 4 150 297 B1

FIG.16

FIG.17

EP 4 150 297 B1

FIG.18

EP 4 150 297 B1

FIG.19

EP 4 150 297 B1

FIG.20

FIG.21

FIG.22

EP 4 150 297 B1

FIG.23

## RÉFÉRENCES CITÉES DANS LA DESCRIPTION

**Documents brevets cités dans la description**

- WO 2017089489 A

- CN 102927978 A
- CN 102927978

**Littérature non-brevet citée dans la description**

- Symmetric microwave potentials for interferometry with thermal atoms on a chip. **AMMAR, M.** ; **DUPONT-NIVET, M.** ; **HUET, L.** ; **POCHOLLE, J.-P.** ; **ROSENBUSCH, P.** ; **BOUCHOULE, I.** ; **WESTBROOK, C. I.** ; **ESTÈVE, J.** ; **REICHEL, J.** ; **GUERLIN, C.** Phys. Rev. A. American Physical Society, 2015, vol. 91, 053623

- *Physical Review A*, 2015, vol. 91, 053623